(19) Europäisches Patentamt
European Patent Office
Office européen des brevets

(11) EP 4 635 989 A1

(12) **EUROPEAN PATENT APPLICATION**
published in accordance with Art. 153(4) EPC

(43) Date of publication:
**22.10.2025 Bulletin 2025/43**

(21) Application number: **23903423.4**

(22) Date of filing: **07.12.2023**

(51) International Patent Classification (IPC):
***C08F 2/40*** (2006.01) ***B60C 1/00*** (2006.01)
***C08F 236/10*** (2006.01) ***C08L 9/06*** (2006.01)

(52) Cooperative Patent Classification (CPC):
**B60C 1/00; C08F 2/40; C08F 236/10; C08L 9/06;**
Y02T 10/86

(86) International application number:
**PCT/JP2023/043887**

(87) International publication number:
**WO 2024/128136 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 JP 2022201615**

(71) Applicant: **Zeon Corporation**
**Tokyo 100-8246 (JP)**

(72) Inventors:
- **RODRIGUEZ CASTANON, Jesus**
  **Tokyo 100-8246 (JP)**
- **FUJII ITO, Mana**
  **Tokyo 100-8246 (JP)**
- **KANESAKA, Sho**
  **Ichihara-shi, Chiba 299-0195 (JP)**
- **BANDO, Akinori**
  **Ichihara-shi, Chiba 299-0195 (JP)**
- **MURATA IWADATE, Risa**
  **Ichihara-shi, Chiba 299-0195 (JP)**
- **ICHIMIYA HIRAGUCHI, Yukari**
  **Tokyo 103-6020 (JP)**

(74) Representative: **Maiwald GmbH**
**Elisenhof**
**Elisenstraße 3**
**80335 München (DE)**

(54) **CONJUGATED-DIENE-BASED POLYMER, CONJUGATED-DIENE-BASED POLYMER COMPOSITION, CROSSLINKED RUBBER OBJECT, AND TIRE**

(57) A conjugated diene-based polymer comprising a conjugated diene monomer unit and an aromatic vinyl monomer unit, wherein a difference between an aromatic vinyl monomer unit content ($A_L$) in a low molecular weight component (L) contained in the conjugated diene-based polymer and an aromatic vinyl monomer unit content ($A_H$) in a high molecular weight molecule (H) contained therein "aromatic vinyl monomer unit content ($A_L$) - aromatic vinyl monomer unit content ($A_H$) " is 2% by weight or more.

EP 4 635 989 A1

## Description

### TECHNICAL FIELD

The present invention relates to a conjugated diene-based polymer, a conjugated diene-based polymer composition, a cross-linked rubber, and a tire, and more specifically relates to a conjugated diene-based polymer which has high processability and can provide a cross-linked rubber having high wet grip properties, high driving stability, high tensile strength, and excellent elongation, and a conjugated diene-based polymer composition, a cross-linked rubber, and a tire prepared from such a conjugated diene-based polymer.

### BACKGROUND ART

Recent tires for automobiles require high wet grip properties and high driving stability for safety reasons. As polymer compositions for automobile tires, for example, polymer compositions comprising a conjugated diene-based polymer such as polybutadiene or butadiene-styrene copolymer and a filler such as carbon black or silica are used.

As a conjugated diene-based polymer used to give such a tire, Patent Document 1 discloses a conjugated diene-based polymer satisfying (1) to (4) below:

(1) The conjugated diene-based polymer has two or more peaks in a molecular weight distribution curve obtained by measurement with gel permeation chromatography (GPC);
(2) The molecular weight distribution curve contains a peak (A) having a peak molecular weight of 500,000 to 2,500,000 and a peak (B) of a peak molecular weight of 150,000 to 600,000;
(3) A total value of an area of the peak (A) and an area of the peak (B) is 70% or more of a total area of the molecular weight distribution curve; and
(4) An absolute value of difference between a glass transition temperature (Tg(A)) of a conjugated diene-based polymer in the peak (A) and a glass transition temperature (Tg(B)) of a conjugated diene-based polymer in the peak (B) is 2°C to 30°C.

### RELATED ART DOCUMENTS

### PATENT DOCUMENTS

Patent Document 1: WO 2018/147312

### SUMMARY OF THE INVENTION

### PROBLEM TO BE SOLVED BY THE INVENTION

The conjugated diene-based polymer obtained by the technique disclosed in Patent Document 1 has insufficient processability, and a cross-linked rubber prepared from this has wet grip properties having room for improvement.

The present invention has been made in consideration of such problems. An object of the present invention is to provide a conjugated diene-based polymer which has high processability and can provide a cross-linked rubber having high wet grip properties, high driving stability, high tensile strength, and excellent elongation. Another object of the present invention is to provide a conjugated diene-based polymer composition, a cross-linked rubber, and a tire prepared from such a conjugated diene-based polymer, and a method of producing such a conjugated diene-based polymer.

### MEANS FOR SOLVING PROBLEMS

The present inventors, who have conducted extensive research to achieve the above objects, have found that the above objects can be achieved by a conjugated diene-based polymer comprising a conjugated diene monomer unit and an aromatic vinyl monomer unit by controlling a difference $\Delta A$ between an aromatic vinyl monomer unit content ($A_L$) in a low molecular weight component (L) contained in the conjugated diene-based polymer and an aromatic vinyl monomer unit content ($A_H$) in a high molecular weight component (H) contained in the conjugated diene-based polymer to fall within a specific range, and thus have completed the present invention.

Specifically, the present invention provides the following modes.

[1] A conjugated diene-based polymer comprising a conjugated diene monomer unit and an aromatic vinyl monomer unit,

wherein a difference ΔA between an aromatic vinyl monomer unit content ($A_L$) in a low molecular weight component (L) contained in the conjugated diene-based polymer and an aromatic vinyl monomer unit content ($A_H$) in a high molecular weight component (H) contained in the conjugated diene-based polymer "difference ΔA = aromatic vinyl monomer unit content ($A_L$) - aromatic vinyl monomer unit content ($A_H$)" is 2% by weight or more.

[2] The conjugated diene-based polymer according to [1], wherein the conjugated diene-based polymer shows two or more peaks in a molecular weight distribution curve obtained with measurement by gel permeation chromatography,

the two or more peaks include a low molecular weight molecule peak (LP) having a peak top molecular weight of 80,000 to 200,000, and
the conjugated diene-based polymer has an ionic strength index of 70% or less.

[3] The conjugated diene-based polymer according to [2], wherein the peak top molecular weight of the low molecular weight molecule peak (LP) is 100,000 to 190,000.

[4] The conjugated diene-based polymer according to [2] or [3], wherein the proportion of a polymer component corresponding to the low molecular weight molecule peak (LP) is 10 to 65% by weight.

[5] The conjugated diene-based polymer according to any one of [2] to [4], wherein the conjugated diene-based polymer has an entire weight average molecular weight (Mw) of 300,000 to 900,000.

[6] A conjugated diene-based polymer composition comprising the conjugated diene-based polymer according to any one of [1] to [5], and a filler.

[7] A cross-linked rubber prepared by cross-linking the conjugated diene-based polymer composition according to [6].

[8] A tire comprising the cross-linked rubber according to [7].

[9] A method of producing the conjugated diene-based polymer according to any one of [1] to [5], the method comprising:

a first step of copolymerizing monomers containing a conjugated diene monomer and an aromatic vinyl monomer in a solvent in the presence of a polymerization initiator;
a second step of deactivating part of polymerization active terminals contained in the polymerization reaction system by adding a polymerization reaction terminator in such an amount that it deactivates 10 to 95 mol% of the polymerization active terminals when the polymerization conversion ratio reaches 5% or more and less than 95%, and then continuing the polymerization reaction; and
a third step of terminating the polymerization reaction by adding a polymerization reaction terminator after the polymerization conversion ratio reaches 95% or more.

[10] The method of producing the conjugated diene-based polymer according to [9], wherein the total amount of the aromatic vinyl monomer used in a polymerization reaction is added to the polymerization reaction system before the start of the polymerization reaction.

[11] The method of producing the conjugated diene-based polymer according to [9] or [10], wherein when the total amount of the conjugated diene monomer and the aromatic vinyl monomer copolymerizable with the conjugated diene monomer used in the polymerization reaction is regarded as 100% by weight, 40 to 70% by weight of the total amount of the conjugated diene monomer and the aromatic vinyl monomer copolymerizable with the conjugated diene monomer is added to the polymerization reaction system before the start of the polymerization reaction.

[12] The method of producing the conjugated diene-based polymer according to any one of [9] to [11], wherein the polymerization reaction terminator is added in the second step in such an amount that it deactivates 20 to 95 mol% of polymerization active terminals contained in the polymerization reaction system.

[13] The method of producing the conjugated diene-based polymer according to any one of [9] to [12], wherein the polymerization reaction terminator is added in the second step at a timing at which the polymerization conversion ratio is 15 to 75%.

EFFECTS OF THE INVENTION

The present invention provides a conjugated diene-based polymer which has high processability and can provide a cross-linked rubber having high wet grip properties, high driving stability, high tensile strength, and excellent elongation. The present invention also provides a conjugated diene-based polymer composition, a cross-linked rubber, and a tire prepared from such a conjugated diene-based polymer and a method of producing such a conjugated diene-based polymer.

DESCRIPTION OF EMBODIMENTS

<Conjugated diene-based polymer>

The conjugated diene-based polymer according to the present invention is a conjugated diene-based polymer comprising a conjugated diene monomer unit and an aromatic vinyl monomer unit,
wherein a difference ΔA between an aromatic vinyl monomer unit content ($A_L$) in a low molecular weight component (L) contained in the conjugated diene-based polymer and an aromatic vinyl monomer unit content ($A_H$) in a high molecular weight component (H) contained in the conjugated diene-based polymer "difference ΔA = aromatic vinyl monomer unit content ($A_L$) - aromatic vinyl monomer unit content ($A_H$)" is 2% by weight or more.

Examples of conjugated diene compounds for forming the conjugated diene monomer unit include 1,3-butadiene, isoprene, 2,3-dimethyl-1,3-butadiene, 2-chloro-1,3-butadiene, 1,3-pentadiene, 1,3-hexadiene, and the like. Among these, preferred are 1,3-butadiene and isoprene, and more preferred is 1,3-butadiene. The conjugated diene monomer unit content in the conjugated diene-based polymer according to the present invention is preferably 50 to 92% by weight, more preferably 50 to 90% by weight, still more preferably 56 to 88% by weight relative to 100% by weight of the total monomer content. The conjugated diene monomer unit content in the conjugated diene-based polymer according to the present invention may be 70 to 88% by weight, or may be 56 to 68% by weight, for example.

Examples of aromatic vinyl compounds for forming the aromatic vinyl monomer unit include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene. The aromatic vinyl monomer unit content in the conjugated diene-based polymer according to the present invention is preferably 8 to 50% by weight, more preferably 10 to 50% by weight, still more preferably 12 to 44% by weight relative to 100% by weight of the total monomer content. When the aromatic vinyl monomer unit content falls within the ranges above, a cross-linked rubber having higher wet grip properties and driving stability can be obtained. The aromatic vinyl monomer unit content in the conjugated diene-based polymer according to the present invention may be 12 to 30% by weight, or may be 32 to 44% by weight, for example.

In addition to the conjugated diene monomer unit and the aromatic vinyl monomer unit, the conjugated diene-based polymer according to the present invention may contain a unit of a vinyl compound having a functional group interactive with silica.

In a preferred embodiment of the vinyl compound having a functional group interactive with silica, the vinyl compound having a silicon atom-containing functional group which can be suitably used is, for example, a compound represented by General Formula (1):

[Chem. 1]

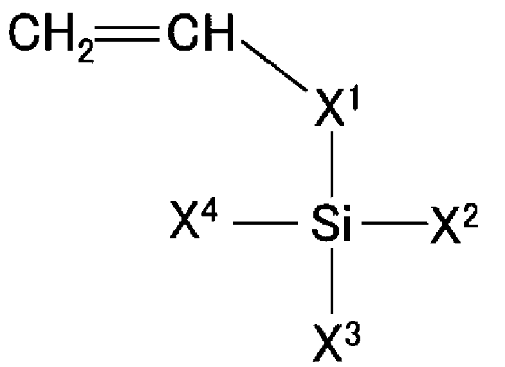

(1)

where $X^1$ represents a chemical single bond or a hydrocarbylene group, and $X^2$, $X^3$, and $X^4$ each independently represent a substituted amino group, a hydrocarbyloxy group, or an optionally substituted hydrocarbyl group.

In General Formula (1), $X^1$ is a chemical single bond or a hydrocarbylene group, preferably a chemical single bond. Examples of the hydrocarbylene group include alkylene, alkenediyl, and arylene groups, groups of arylene groups bonded to alkylene groups, and the like.

Examples of alkylene groups include a methylene group, an ethylene group, a trimethylene group, and the like. Examples of alkenediyl groups include a vinylene group, an ethylene-1,1-diyl group, and the like. Examples of arylene groups include a phenylene group, a naphthylene group, a biphenylene group, and the like. Examples of arylene groups bonded to alkylene groups include a group of a phenylene group bonded to a methylene group, a group of a phenylene group bonded to an ethylene group, and the like. When $X^1$ is a hydrocarbylene group, $X^1$ is preferably an arylene group, more preferably a phenylene group.

In General Formula (1), $X^2$, $X^3$, and $X^4$ each independently represent a substituted amino group, a hydrocarbyloxy group, or an optionally substituted hydrocarbyl group. It is preferred that at least one of $X^2$, $X^3$, and $X^4$ be a substituted amino group, and it is more preferred that two of $X^2$, $X^3$, and $X^4$ be a substituted amino group.

A suitable substituted amino group which can form $X^2$, $X^3$, and $X^4$ is a group represented by General Formula (2):

[Chem. 2]

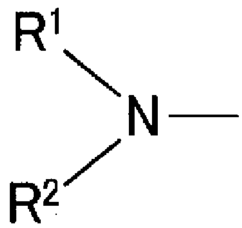

(2)

where $R^1$ and $R^2$ may or may not be bonded to each other; if $R^1$ and $R^2$ are not bonded to each other, $R^1$ and $R^2$ each independently represent an optionally substituted hydrocarbyl group or a trihydrocarbylsilyl group; and if $R^1$ and $R^2$ are bonded to each other, $R^1$ and $R^2$ represent a hydrocarbylene group optionally containing at least one species selected from the group consisting of nitrogen, oxygen, sulfur, and silicon atoms.

Examples of a hydrocarbyl group which can form $R^1$ and $R^2$ include chain alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, preferred are chain alkyl groups, and more preferred is a methyl group or an ethyl group.

If the hydrocarbyl group which can form $R^1$ and $R^2$ has a substituent, examples thereof include hydrocarbyl groups having a hydrocarbyloxy group as a substituent, and the like. Examples of a hydrocarbyl group having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form $R^1$ and $R^2$ include trialkylsilyl groups such as a trimethylsilyl group, a triethylsilyl group, and a tert-butyldimethylsilyl group, and the like.

If $R^1$ and $R^2$ are bonded to each other, examples of the hydrocarbylene group which can form $R^1$ and $R^2$ include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form $R^1$ and $R^2$ contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a group represented by $-CH=N-CH_2-CH_2-$, a group represented by $-CH_2-CH_2-O-CH_2-CH_2-$, a group represented by $-CH_2-CH_2-S-CH_2-CH_2-$, a group represented by $-CH_2-CH_2-SiH_2-CH_2-CH_2-$, a group represented by $-CH_2-CH_2-SiMe_2-CH_2-CH_2-$, a group represented by $-CH_2-CH_2-SiEt_2-CH_2-CH_2-$, and the like.

Preferably, $R^1$ and $R^2$ are an alkyl group or are bonded to form an alkylene group. More preferably, $R^1$ and $R^2$ are an alkyl group. Still more preferably, $R^1$ and $R^2$ are a methyl group or an ethyl group.

When $R^1$ and $R^2$ in General Formula (2) are hydrocarbyl groups, specific examples of groups represented by General Formula (2) include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, preferred are dialkylamino groups, and more preferred are a dimethylamino group, a diethylamino group, and a di-n-butylamino group.

In General Formula (2), if $R^1$ and $R^2$ each are a hydrocarbyl group having a hydrocarbyloxy group as a substituent, specific examples of the group represented by General Formula (2) include di(alkoxyalkyl)amino groups such as a di (methoxymethyl) amino group and a di(ethoxymethyl)amino group, and the like.

If $R^1$ and $R^2$ in General Formula (2) are trihydrocarbylsilyl groups, specific examples of the group represented by General Formula (2) include trialkylsilyl group-containing amino groups such as a bis(trimethylsilyl)amino group, a bis(tert-butyldimethylsilyl)amino group, and an N-trimethylsilyl-N-methylamino group, and the like.

If $R^1$ and $R^2$ in General Formula (2) are bonded to each other to form a hydrocarbylene group, specific examples of the group represented by General Formula (2) include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

If $R^1$ and $R^2$ in General Formula (2) are bonded to form a hydrocarbylene group containing a nitrogen atom and/or an oxygen atom, specific examples of the group represented by General Formula (2) include a 1-imidazolyl group, a 4,5-dihydro-1-imidazolyl group, a morpholino group, and the like.

The group represented by General Formula (2) is preferably a dialkylamino group or a 1-alkyleneimino group. More preferred are dialkylamino groups, and still more preferred are a dimethylamino group, a diethylamino group, and a di-n-butylamino group.

Examples of the hydrocarbyloxy group which can form $X^2$, $X^3$, and $X^4$ in General Formula (1) include alkoxy groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form $X^2$, $X^3$, and $X^4$ in General Formula (1) include alkyl groups such as a methyl group, an ethyl group, an n-propyl group, an isopropyl group, an n-butyl group, a sec-butyl group, and a tert-butyl group; aryl groups such as a phenyl group, a 4-methyl-1-phenyl group, and a benzyl group; and the like.

If the hydrocarbyl group which can form $X^2$, $X^3$, and $X^4$ has a substituent, examples thereof include hydrocarbyl groups having a hydrocarbyloxy group as a substituent. Examples thereof include alkoxyalkyl groups such as a methoxymethyl group, an ethoxymethyl group, an ethoxyethyl group, and the like.

If in General Formula (1), $X^1$ is a chemical single bond and one of $X^2$, $X^3$, and $X^4$ is a substituted amino group, specific examples of the vinyl compound having a silicon atom-containing functional group represented by General Formula (1) include (dialkylamino)dialkylvinylsilanes such as (dimethylamino)dimethylvinylsilane, (ethylmethylamino) dimethylvinylsilane, (di-n-propylamino)dimethylvinylsilane, (diisopropylamino)dimethylvinylsilane, (dimethylamino) diethylvinylsilane, (ethylmethylamino)diethylvinylsilane, (di-n-propylamino)diethylvinylsilane, and (diisopropylamino) diethylvinylsilane; [bis(trialkylsilyl)amino]dialkylvinylsilanes such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl) amino]diethylvinylsilane; (dialkylamino)di (alkoxyalkyl) vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino) di(ethoxyethyl)vinylsilane, (diethylamino)di (methoxymethyl) vinylsilane, (diethylamino)di(methoxyethyl)vinylsilane, (diethylamino)di (ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1), $X^1$ is a hydrocarbylene group and one of $X^2$, $X^3$, and $X^4$ is a substituted amino group, specific examples of the vinyl compound having a silicon atom-containing functional group represented by General Formula (1) include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino) diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1), $X^1$ is a chemical single bond and two of $X^2$, $X^3$, and $X^4$ are substituted amino groups, specific examples of the vinyl compound containing a silicon atom-containing functional group represented by General Formula (1) include bis (dialkylamino)alkylvinylsilanes such as bis(dimethylamino)methylvinylsilane, bis(diethylamino) methylvinylsilane, bis(di-n-propylamino)methylvinylsilane, bis(di-n-butylamino)methylvinylsilane, bis(dimethylamino) ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis (dimethylamino)methoxyethylvinylsilane, bis (dimethylamino) ethoxymethylvinylsilane, bis (dimethylamino) ethoxyethylvinylsilane, bis(diethylamino)methoxymethylvinylsilane, bis(diethylamino)methoxyethylvinylsilane, bis(diethylamino) ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis (morpholino)methylvinylsilane; and the like.

If in General Formula (1), $X^1$ is a hydrocarbylene group and two of $X^2$, $X^3$, and $X^4$ are substituted amino groups, specific examples of the vinyl compound having a silicon atom-containing functional group represented by General Formula (1) include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino) methyl-3-vinylphenylsilane, bis(di-n-propylamino)methyl-4-vinylphenylsilane, bis(din-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(din-butylamino)ethyl-4-vinylphenylsilane, and bis(di-n-butylamino)ethyl-3-vinylphenylsilane.

If in General Formula (1), $X^1$ is a chemical single bond and three of $X^2$, $X^3$, and $X^4$ are substituted amino groups, specific examples of the vinyl compound having a silicon atom-containing functional group represented by General Formula (1) include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane, and the like.

If in General Formula (1), $X^1$ is a hydrocarbylene group and three of $X^2$, $X^3$, and $X^4$ are substituted amino groups, specific examples of the vinyl compound having silicon atom-containing functional group represented by General Formula (1) include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane.

If in General Formula (1), $X^1$ is a chemical single bond and all of $X^2$, $X^3$, and $X^4$ are not substituted amino groups, specific examples of the vinyl compound having a silicon atom-containing functional group represented by General Formula (1) include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1), preferred are those where $X^1$ is a chemical single bond, more preferred are those where $X^1$ is a chemical single bond and two of $X^2$, $X^3$, and $X^4$ are substituted amino groups, and particularly preferred are those where $X^1$ is a chemical single bond and two of $X^2$, $X^3$, and $X^4$ are dialkylamino groups.

Among these compounds represented by General Formula (1), preferred are bis(dimethylamino)methylvinylsilane, bis(diethylamino)methylvinylsilane, and bis(di-n-butylamino)methylvinylsilane, and particularly preferred is bis(diethylamino)methylvinylsilane.

Examples of vinyl compounds having a functional group interactive with silica other than the compound represented by General Formula (1) include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) is used as the vinyl compound having a functional group interactive with silica, the conjugated diene-based polymer according to the present invention includes a unit represented by General Formula (3) as the unit of the vinyl compound having a functional group interactive with silica:

[Chem. 3]

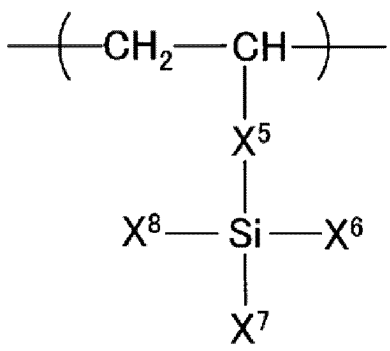

(3)

where $X^5$ represents a chemical single bond or a hydrocarbylene group, and $X^6$, $X^7$, and $X^8$ each independently represent a hydroxyl group, a substituted amino group, a hydrocarbyloxy group, or an optionally substituted hydrocarbyl group.

In the unit represented by General Formula (3), $X^5$ corresponds to $X^1$ in the compound represented by General Formula (1), and $X^6$, $X^7$, and $X^8$ correspond to $X^2$, $X^3$, and $X^4$ in the compound represented by General Formula (1), respectively. For this reason, $X^5$, $X^6$, $X^7$, and $X^8$ in the unit represented by General Formula (3) can be the same as those listed for $X^1$, $X^2$, $X^3$, and $X^4$ in the compound represented by General Formula (1). When the compound represented by General Formula (1) where at least one of $X^2$, $X^3$, and $X^4$ is a substituted amino group or a hydrocarbyloxy group is used, at least one of $X^2$, $X^3$, and $X^4$ can be converted into a hydroxyl group as a result of hydrolysis of the substituted amino group or the hydrocarbyloxy group at any timing in any step.

In the conjugated diene-based polymer according to the present invention, the content of the unit of the vinyl compound having a functional group interactive with silica is preferably 0.001 to 10.000% by weight, more preferably 0.001 to 3.000% by weight in 100% by weight of the total monomer amount. By controlling the content of the unit of the vinyl compound having a functional group interactive with silica within these ranges, sufficient processability is ensured and a cross-linked rubber having further enhanced fuel efficiency can be obtained.

The conjugated diene-based polymer according to the present invention may contain a different monomer unit other than the conjugated diene monomer unit, the aromatic vinyl monomer unit, and the unit of the vinyl compound having a functional group interactive with silica. Examples of a different compound forming such a different monomer unit include chain olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like.

In the conjugated diene-based polymer according to the present invention, the bonding sequences of the monomer units can be a variety of bonding sequences such as a block sequence, a tapered sequence, and a random sequence, for example. Preferred is a random bonding sequence. Control to a random sequence results in a cross-linked rubber having further enhanced fuel efficiency.

The conjugated diene-based polymer according to the present invention preferably has a modifying group, and more preferably has a modifying group (terminal-modifying group) formed by modifying a terminal of the polymer chain of the conjugated diene-based polymer with a modifier. In this specification, it is sufficient that the "conjugated diene-based polymer having a modifying group" is the one in which at least part of the polymer chains contained in the conjugated diene-based polymer has a modifying group. In other words, part of the polymer chains contained in the conjugated diene-based polymer need not have a modifying group.

A preferred modifying group contains a functional group interactive with silica because it can appropriately enhance compatibility with a filler such as silica and a cross-linked rubber having further enhanced wet grip properties and driving stability can be obtained. Here, the functional group interactive with silica indicates a functional group which can form a covalent bond between the functional group and the surface of silica or can cause an intermolecular force weaker than a covalent bond (such as ion-dipole interaction, dipole-dipole interaction, hydrogen bond, or van der Waals force). The interaction formed between silica and the functional group is preferably a covalent bond or an intermolecular force weaker than a covalent bond (such as ion-dipole interaction, dipole-dipole interaction, hydrogen bond, or van der Waals force). More preferred is a weak intermolecular force (such as ion-dipole interaction, dipole-dipole interaction, hydrogen bond, or van der Waals force) because the ionic strength index is easily controlled within a suitable range. Examples of the functional group interactive with silica include, but should not be limited to, nitrogen atom-containing functional groups, silicon atom-containing functional groups, oxygen atom-containing functional groups, and the like.

From the viewpoint of high interaction with silica, preferred modifiers for forming the modifying group are silicon atom-containing modifiers and nitrogen atom-containing modifiers, and more preferred modifiers are silicon atom-containing modifiers. Examples of silicon atom-containing modifiers include siloxane compounds, hydrocarbyloxysilane compounds, and the like. Among these, preferred are hydrocarbyloxysilane compounds having a nitrogen atom-containing functional group.

Examples of nitrogen atom-containing modifiers include N,N-disubstituted aminoalkyl(meth)acrylamides such as dimethylaminoethylacrylamide, diethylaminoethylacrylamide, dimethylaminopropylacrylamide, diethylaminopropylacrylamide, dimethylaminobutylacrylamide, diethylaminobutylacrylamide, dimethylaminoethylmethacrylamide, diethylaminoethylmethacrylamide, dimethylaminopropylmethacrylamide, diethylaminopropylmethacrylamide, dimethylaminobutylmethacrylamide, and diethylaminobutylmethacrylamide; pyrrolidone compounds such as N-phenyl-2-pyrrolidone, N-methyl-2-pyrrolidone, N-ethyl-2-pyrrolidone, and 1-cyclohexyl-2-pyrrolidone; and the like.

Examples of hydrocarbyloxysilane compounds having a nitrogen atom-containing functional group include amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane.

In the conjugated diene-based polymer according to the present invention, the difference $\Delta A$ between an aromatic vinyl monomer unit content ($A_L$) in a low molecular weight component (L) and an aromatic vinyl monomer unit content ($A_H$) in a high molecular weight component (H), that is, "difference $\Delta A$ = aromatic vinyl monomer unit content ($A_L$) - aromatic vinyl monomer unit content ($A_H$)" is 2% by weight or more.

In the present invention, the high molecular weight component (H) in the calculation to determine $A_H$ refers to a polymer component detected in an elution time t5 to t50 at which the area determined by accumulation of area from the shorter elution time side in an RI elution profile c(t), which is obtained by measurement of the conjugated diene-based polymer according to the present invention by gel permeation chromatography (GPC) using a UV detector and an RI detector, is 5 to 50% of the total area (100%) of the RI elution profile c(t). The low molecular weight component (L) in the calculation to determine $A_L$ refers to a polymer component detected in an elution time t50 to t95 at which the area determined by accumulation of area from the shorter elution time side in an RI elution profile c(t), which is obtained by

measurement of the conjugated diene-based polymer according to the present invention by gel permeation chromatography (GPC) using a UV detector and an RI detector, is 50 to 95% of the total area (100%) of the RI elution profile c(t).

In the present invention, the aromatic vinyl monomer unit content in such a low molecular weight component (L) and that in such a high molecular weight component (H) are controlled within specific ranges, thereby giving a conjugated diene-based polymer which has high processability and can provide a cross-linked rubber having high wet grip properties, high driving stability, high tensile strength, and excellent elongation.

Specifically, the difference ΔA between the aromatic vinyl monomer unit content ($A_L$) in the low molecular weight component (L) and the aromatic vinyl monomer unit content ($A_H$) in the high molecular weight component (H), that is, "difference ΔA = aromatic vinyl monomer unit content ($A_L$) - aromatic vinyl monomer unit content ($A_H$)" is controlled to 2% by weight or more, preferably 2 to 42% by weight, more preferably 2 to 38% by weight, still more preferably 3 to 35% by weight. The difference ΔA may be adjusted according to the proportion of the aromatic vinyl monomer unit contained in the entire conjugated diene-based polymer. When the proportion of the aromatic vinyl monomer unit contained in the entire conjugated diene-based polymer is 8% by weight or more and less than 20% by weight, the difference ΔA is preferably 2 to 12% by weight, more preferably 4to 9% by weight. When the proportion of the aromatic vinyl monomer unit contained in the entire conjugated diene-based polymer is 20% by weight or more and less than 32% by weight, the difference ΔA is preferably 5 to 17% by weight, more preferably 7 to 13% by weight. When the proportion of the aromatic vinyl monomer unit contained in the entire conjugated diene-based polymer is 32% by weight or more and 50% by weight or less, the difference ΔA is preferably 2 to 42% by weight, more preferably 3 to 35% by weight.

Examples of a method of determining the difference ΔA include a method according to Examples described later. Examples of a method of controlling the difference ΔA within the above ranges include, but should not be limited to, a method of deactivating part of polymerization active terminals contained in the polymerization reaction system by adding a polymerization reaction terminator in such an amount that it deactivates 10 to 95 mol% of the polymerization active terminals when the polymerization conversion ratio reaches 5% or more and less than 95%, and then continuing the polymerization reaction; and the like.

It is preferred that the conjugated diene-based polymer according to the present invention show two or more peaks in a molecular weight distribution curve obtained with measurement by gel permeation chromatography (GPC), and the two or more peaks include a low molecular weight molecule peak (LP) having a peak top molecular weight (Mp) of 80,000 to 200,000. The number of peaks is preferably 2 to 7, more preferably 3 to 5.

In the conjugated diene-based polymer according to the present invention, among detected peaks having a peak top molecular weight of 400,000 or less in the molecular weight distribution curve obtained with measurement by gel permeation chromatography (GPC), a peak having the largest area is defined as low molecular weight molecule peak (LP). Among the remaining peaks having a peak top molecular weight of more than 400,000 after the low molecular weight molecule peak (LP) is excluded, a peak having the largest area is defined as high molecular weight molecule peak (HP). In the present invention, the peak top molecular weight (Mp) of the low molecular weight molecule peak (LP) is preferably 80,000 to 200,000, more preferably 90,000 to 200,000, still more preferably 100,000 to 190,000. When the peak top molecular weight (Mp) of the low molecular weight molecule peak (LP) falls within these ranges above, the processability, the wet grip properties, and the driving stability can be further enhanced. The peak top molecular weight (Mp) of the high molecular weight molecule peak (HP) is preferably 450,000 to 1,300,000, more preferably 450,000 to 1,200,000, still more preferably 500,000 to 1,100,000. The peak top molecular weight is a molecular weight determined against standard polystyrenes.

In the conjugated diene-based polymer according to the present invention, the proportion of the polymer component corresponding to the low molecular weight molecule peak (LP) is preferably 10 to 65% by weight, more preferably 15 to 65% by weight, still more preferably 20 to 65% by weight. When the proportion of the polymer component corresponding to the low molecular weight molecule peak (LP) falls within the ranges above, the processability, the wet grip properties, and the driving stability can be further enhanced. In the conjugated diene-based polymer according to the present invention, the proportion of the polymer component having the high molecular weight molecule peak (HP) is preferably 35 to 90% by weight, more preferably 35 to 85% by weight, still more preferably 35 to 80% by weight.

The peak top molecular weight of the low molecular weight molecule peak (LP), the peak top molecular weight of the high molecular weight molecule peak (HP), the proportion of the polymer component corresponding to the low molecular weight molecule peak (LP), and the proportion of the polymer component having the high molecular weight molecule peak (HP) can be measured by the methods according to Examples described later.

The conjugated diene-based polymer according to the present invention has an entire weight average molecular weight (Mw) of preferably 300,000 to 900,000, more preferably 350,000 to 800,000, still more preferably 410,000 to 730,000, and has an entire molecular weight distribution (Mw/Mn) of preferably 1.3 to 5.0, more preferably 1.5 to 4.0, still more preferably 1.7 to 3.5. The entire weight average molecular weight (Mw) and the entire molecular weight distribution (Mw/Mn) can be determined with measurement by gel permeation chromatography (GPC) as values against polystyrene standards using the methods according to Examples described later.

The conjugated diene-based polymer according to the present invention preferably has an ionic strength index of

70% or less. The ionic strength index is a value calculated from the following Expression (I) based on the results obtained in measurements of a sample solution containing the conjugated diene-based polymer and an internal standard polystyrene (molecular weight: 5000) by gel permeation chromatography (GPC) using a styrene-based column and gel permeation chromatography (GPC) using a cation exchange column:

ionic strength index (%) = $\{1 - (A_{CX}/B_{CX}) \times (B_{sty}/A_{sty})\} \times 100$ (I)
$A_{CX}$: The peak area in the molecular weight distribution curve of the conjugated diene-based polymer obtained with measurement by GPC using a cation exchange column
$B_{CX}$: The peak area of the peak of an internal standard polystyrene obtained with measurement by GPC using a cation exchange column
$B_{sty}$: The peak area of the peak of an internal standard polystyrene obtained with measurement by GPC using a styrene-based column
$A_{sty}$: The peak area in the molecular weight distribution curve of the conjugated diene-based polymer obtained with measurement by GPC using a styrene-based column

Here, in the definitions of $A_{CX}$ and $A_{sty}$, the peak area in the molecular weight distribution curve of the conjugated diene-based polymer refers to a peak area in the molecular weight distribution curve obtained by removing a region having a molecular weight of less than 5000 from the molecular weight distribution curve obtained by the measurement and further removing the peak of the internal standard polystyrene therefrom.
In addition, a column containing a styrenedivinylbenzene gel filler is used as the styrene-based column.
Specifically, the measurements by GPC using a styrene-based column and GPC using a cation exchange column can be performed under conditions in Examples described later.
If the conjugated diene-based polymer contains impurities such as oil, those impurities may cause an error in the measured value of the ionic strength index. In such a case, the conjugated diene-based polymer may be subjected to Soxhlet extraction or the like as needed to remove impurities and the like, and thereafter, the ionic strength index may be measured.
In the measurement by GPC using a cation exchange column, ionic interaction forms between part of polymer chains of the conjugated diene-based polymer and the surface of the cation exchange column. For this reason, as the polymer chain forming ionic interaction is present in a larger proportion in the conjugated diene-based polymer and the polymer chain forms stronger ionic interaction, compared to the molecular weight distribution curve obtained using the styrene-based column, the peak intensity derived from the polymer chain tends to be lower and the ionic strength index determined from Expression (I) above tends to be greater in the molecular weight distribution curve obtained using the cation exchange column.
The conjugated diene-based polymer according to the present invention has an ionic strength index of preferably 70% or less, more preferably 60% or less, still more preferably 45% or less. The lower limit of the ionic strength index is preferably 0.5% or more, although not particularly limited thereto. When the ionic strength index falls within the range above, tensile strength can be further enhanced while high processability is implemented.
The ionic strength index can be controlled by adjusting the proportion of the polymer chain having a functional group forming interaction with the cation exchange column (e.g., a cationic group such as an amino group) present in the conjugated diene-based polymer, the position of the functional group in the polymer chain (for example, in the polymer chain or at the polymer chain terminal), the molecular structure near the functional group, the proportion of the functional group present, and the like.
The vinyl bond content in the conjugated diene monomer unit (such as isoprene monomer unit and 1,3-butadiene monomer unit) in the entire conjugated diene-based polymer according to the present invention is preferably 1 to 90% by weight, more preferably 3 to 85% by weight, still more preferably 5 to 80% by weight, particularly preferably 25 to 75% by weight. When the vinyl bond content in the conjugated diene monomer unit in the entire conjugated diene-based polymer falls within these ranges above, higher wet grip properties can be obtained.
The conjugated diene-based polymer according to the present invention has a Mooney viscosity ($ML_{1+4}$, 125°C) of preferably 20 to 100, more preferably 25 to 90, particularly preferably 30 to 80. When the conjugated diene-based polymer is prepared into an oil extended rubber, it is preferred that the Mooney viscosity of the oil extended rubber be controlled to fall within these ranges above.
Although the glass transition temperature (Tg) of the conjugated diene-based polymer according to the present invention is not particularly limited, it is preferably 20 to -110°C, more preferably 10°C to -70°C. The glass transition temperature of the conjugated diene-based rubber used in the present invention can be appropriately adjusted by adjusting the aromatic vinyl monomer unit content in the conjugated diene-based polymer and the vinyl bond content in the conjugated diene monomer unit.

<Method of preparing conjugated diene-based polymer>

The method of preparing the conjugated diene-based polymer according to the present invention comprises:

a first step of copolymerizing monomers containing a conjugated diene monomer and an aromatic vinyl monomer in a solvent in the presence of a polymerization initiator;
a second step of deactivating part of polymerization active terminals contained in the polymerization reaction system by adding a polymerization reaction terminator in such an amount that it deactivates 10 to 95 mol% of the polymerization active terminals when the polymerization conversion ratio reaches 5% or more and less than 95%, and then continuing the polymerization reaction; and
a third step of terminating the polymerization reaction by adding a polymerization reaction terminator after the polymerization conversion ratio reaches 95% or more.

The first step is a step of copolymerizing monomers containing a conjugated diene monomer and an aromatic vinyl monomer in a solvent in the presence of a polymerization initiator.
The solvent used in polymerization can be any solvent usually used in solution polymerization as long as it does not inhibit the polymerization reaction. Specific examples of inert solvents include chain or branched aliphatic hydrocarbons such as propane, n-butane, isobutane, n-pentane, isopentane, n-hexane, propene, 1-butene, isobutene, trans-2-butene, cis-2-butene, 1-pentene, 2-pentene, 1-hexene, 2-hexene, and n-heptane; alicyclic hydrocarbons such as cyclopentane and cyclohexane; aromatic hydrocarbons such as benzene, ethylbenzene, toluene, and xylene; ether compounds such as tetrahydrofuran and diethyl ether; and the like. These inert solvents may be used alone or in combination. These inert solvents can be used in any amount without limitation, for example, in such an amount providing a monomer concentration of 1 to 50% by weight, preferably 5 to 40% by weight.
The polymerization initiator used in polymerization can be any polymerization initiator as long as it can catalyze the polymerization of the monomers containing a conjugated diene monomer and an aromatic vinyl monomer to give conjugated diene-based polymer chains having an active terminal. Specific examples thereof include polymerization initiators including organic alkali metal compounds, organic alkaline earth metal compounds, and lanthanum-series metal compounds as primary catalysts. Examples of organic alkali metal compounds include organic monolithium compounds such as n-butyllithium, sec-butyllithium, t-butyllithium, hexyllithium, phenyllithium, ethyllithium, n-propyllithium, isopropyllithium, tert-octyllithium, n-decyllithium, 2-naphthyllithium, 2-butylphenyllithium, 4-phenylbutyllithium, hexyllithium, cyclopentyllithium, the reaction product of diisopropenylbenzene with butyllithium, and stilbene lithium; organic polyvalent lithium compounds such as dilithiomethane, 1,4-dilithiobutane, 1,4-dilithio-2-ethylcyclohexane, 1,3,5-trilithiobenzene, 1,3,5-tris(lithiomethyl)benzene, the reaction product of sec-butyllithium with diisopropenylbenzene, the reaction products of n-butyllithium with 1,3-butadiene and divinylbenzene, and the reaction products of n-butyllithium with polyacetylene compounds; organic sodium compounds such as sodium naphthalene; organic potassium compounds such as potassium naphthalene; organic rubidium compounds; organic cesium compounds; and the like. Besides, examples thereof include alkoxides, sulfonates, carbonates, and amides of lithium, sodium, and potassium, and the like. These may also be used in combination with other organic metal compounds. Furthermore, known organic alkali metal compounds disclosed in U.S. Patent No. 5,708,092, British Patent No. 2,241,239, U.S. Patent No. 5,527,753, and the like can also be used.
The amount of the polymerization initiator to be used is not particularly limited, and is in the range of usually 1 to 50 mmol, preferably 1.2 to 20 mmol, more preferably 2 to 15 mmol per 1000 g of the monomer.
The polymerization temperature is in the range of usually -80 to +150°C, preferably 0 to 100°C, more preferably 30 to 90°C. The polymerization can be performed in any manner, that is, in batch or continuously. Preferred is a batch method when the conjugated diene compound and the aromatic vinyl compound are copolymerized, because randomness in bonding of the conjugated diene monomer unit and the aromatic vinyl monomer unit can be readily controlled. The bonding sequences of the monomers can be a variety of bonding sequences such as a block sequence, a tapered sequence, and a random sequence. Among these, preferred is a random sequence. Control to a random sequence results in a cross-linked rubber having further improved heat build-up.
To adjust the vinyl bond content in the conjugated diene monomer unit in the conjugated diene-based polymer chains to be obtained, a polar compound may be added to an inert organic solvent in the polymerization of the monomers containing a conjugated diene monomer and an aromatic vinyl monomer. Examples of the polar compound to be used include ether compounds, tertiary amines, phosphine compounds, alkali metal alkoxides, alkali metal phenoxides, and the like. Examples of ether compounds include cyclic ethers such as tetrahydrofuran, tetrahydropyran, and 1,4-dioxane; aliphatic monoethers such as diethyl ether and dibutyl ether; aliphatic diethers such as ethylene glycol dimethyl ether, ethylene glycol diethyl ether, and ethylene glycol dibutyl ether; aliphatic triethers such as diethylene glycol diethyl ether and diethylene glycol dibutyl ether; aromatic ethers such as diphenyl ether, anisole, 1,2-dimethoxybenzene, and 3,4-dimethoxytoluene; and the like. Examples of tertiary amines include triethylamine, tripropylamine, tributylamine, 1,1,2,2-tetramethylethylenediamine, N,N-diethylaniline, pyridine, quinoline, and the like. Examples of phosphine compounds

include trimethylphosphine, triethylphosphine, triphenylphosphine, and the like. Examples of alkali metal alkoxides include sodium-tert-butoxide, potassium-tert-butoxide, sodium-tert-pentoxide, potassium-tert-pentoxide, and the like. Examples of alkali metal phenoxides include sodium phenoxide, potassium phenoxide, and the like. These polar compounds may be used alone or in combination. The amount of the polar compound to be used may be determined according to the target vinyl bond content, and is preferably 0.001 to 100 mol, more preferably 0.01 to 10 mol relative to 1 mol of the polymerization initiator. If the amount of the polar compound to be used falls within these ranges, the vinyl bond content in the conjugated diene monomer unit is readily adjusted, and defects caused by deactivation of the polymerization initiator are obstructed.

The second step is a step of deactivating part of polymerization active terminals contained in the polymerization reaction system by adding a polymerization reaction terminator in such an amount that it deactivates 10 to 95 mol% of the polymerization active terminals when the polymerization conversion ratio reaches 5% or more and less than 95%, and then continuing the polymerization reaction.

Specifically, in the production method according to the present invention, after copolymerization of the monomers containing a conjugated diene monomer and an aromatic vinyl monomer in a solvent in the presence of the polymerization initiator (first step) is started, the polymerization reaction terminator is added at a predetermined timing. Part of the polymer chains having a polymerization active terminal contained in the polymerization reaction system is deactivated by adding the polymerization reaction terminator, while the polymerization reaction of the polymer chains having a polymerization active terminal which is not deactivated is continued. Use of such a step allows appropriate control of the difference $\Delta A$ between the aromatic vinyl monomer unit content ($A_L$) in the low molecular weight component (L) contained in a conjugated diene-based copolymer to be obtained and the aromatic vinyl monomer unit content ($A_H$) in the high molecular weight component (H) contained in the conjugated diene-based copolymer to be obtained.

The polymerization reaction terminator can be any polymerization reaction terminator as long as it can react with the polymerization active terminals to make those inactive to the polymerization reaction. Examples thereof include water and alcohols. Specific examples of alcohols include methanol, ethanol, 1-propanol, 2-propanol, 2-methyl-2-propanol, 1-butanol, 2-butanol, 2-methyl-1-propanol, 2-methyl-2-propanol, and the like. Among these, 1-butanol is preferred. These may be used alone or in combination.

As other examples of the terminator, preferred are silicon atom-containing terminators and nitrogen atom-containing terminators, and more preferred are nitrogen atom-containing terminators.

As the nitrogen atom-containing terminators, more preferred are nitrogen atom-containing terminators having a N-H bond. Examples thereof include N,N-disubstituted aminoalkyl(meth)acrylamides such as dimethylaminoethylacrylamide, diethylaminoethylacrylamide, dimethylaminopropylacrylamide, diethylaminopropylacrylamide, dimethylaminobutylacrylamide, diethylaminobutylacrylamide, dimethylaminoethylmethacrylamide, diethylaminoethylmethacrylamide, dimethylaminopropylmethacrylamide, diethylaminopropylmethacrylamide, dimethylaminobutylmethacrylamide, and diethylaminobutylmethacrylamide.

Examples of other nitrogen atom-containing terminators include pyrrolidone compounds such as N-phenyl-2-pyrrolidone, N-methyl-2-pyrrolidone, N-ethyl-2-pyrrolidone, and 1-cyclohexyl-2-pyrrolidone.

Examples of silicon atom-containing terminators include siloxane compounds, hydrocarbyloxysilane compounds, and the like. Examples of silicon atom-containing terminators include amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane.

These terminators may be used alone or in combination.

The polymerization reaction terminator can be added at any timing at which the polymerization conversion ratio is 5% or more and less than 95%. To more appropriately control the difference $\Delta A$, the polymerization reaction terminator is added when the polymerization conversion ratio reaches preferably 10 to 85%, more preferably 15 to 75%, still more preferably 20 to 65%. The polymerization conversion ratio indicates the proportion of the monomers actually polymerized to the total monomers contained in the conjugated diene-based copolymer finally obtained.

In the second step, the polymerization reaction terminator is used in such an amount that it deactivates 10 to 95 mol% of the polymerization active terminals contained in the polymerization reaction system. To more appropriately control the difference $\Delta A$, the polymerization reaction terminator is used in such an amount that it deactivates preferably 15 to 95 mol%, more preferably 20 to 95 mol%, still more preferably 30 to 95 mol% of the polymerization active terminals. The amount of the polymerization active terminals deactivated by the addition of the polymerization reaction terminator can be usually determined from the amount (mol%) of the polymerization reaction terminator to the amount of the polymerization initiator.

In the production method according to the present invention, the monomers containing a conjugated diene monomer and an aromatic vinyl monomer is copolymerized in the first step and the second step. In the copolymerization, to more appropriately control the difference $\Delta A$, it is preferred that the total amount of the aromatic vinyl monomer used in the polymerization reaction be added before the start of the polymerization reaction, and polymerization be started in the state

where the aromatic vinyl monomer is added to the polymerization reaction system.

To more appropriately control the difference ΔA, when the total amount of the conjugated diene monomer and the aromatic vinyl monomer copolymerizable with the conjugated diene monomer used in the polymerization reaction is regarded as 100% by weight, polymerization is started in the state where preferably 40 to 70% by weight, more preferably 45 to 65% by weight of 100% by weight of the total amount of the conjugated diene monomer and the aromatic vinyl monomer copolymerizable with the conjugated diene monomer is added to the polymerization reaction system before the start of the polymerization reaction. In this polymerization, the remaining portions of the conjugated diene monomer and the aromatic vinyl monomer copolymerizable with the conjugated diene monomer used in the polymerization reaction are added after the start of the polymerization reaction. At this operation, when the remaining portions of the conjugated diene monomer and the aromatic vinyl monomer copolymerizable with the conjugated diene monomer used in the polymerization reaction which are added after the start of the polymerization reaction are regarded as 100% by weight, it is preferred that preferably 5 to 50% by weight, more preferably 7 to 30% by weight of the remaining portions be added to the polymerization reaction system before the polymerization reaction terminator is added. Moreover, when the remaining portions of the conjugated diene monomer and the aromatic vinyl monomer copolymerizable with the conjugated diene monomer used in the polymerization reaction which are added after the start of the polymerization reaction are regarded as 100% by weight, it is preferred that preferably 50 to 95% by weight, more preferably 70 to 93% by weight of the remaining portions be added to the polymerization reaction system after the polymerization reaction terminator is added to deactivate part of the polymer chains having a polymerization active terminal.

The third step is a step of terminating the polymerization reaction by adding a polymerization reaction terminator after the polymerization conversion ratio reaches 95% or more. A preferred timing to terminate the polymerization reaction is a timing at which the polymerization conversion ratio reaches 95 to 100%.

The polymerization reaction terminator used in the third step is not particularly limited, and those listed in the second step can be used. The same compound as that used in the second step may be used, or a different compound may be used.

In the third step, before the polymerization reaction terminator is added to terminate the polymerization reaction, a coupling agent may be added to the polymerization reaction system to perform a coupling reaction on the polymer chains having a polymerization active terminal.

Examples of the coupling agent include, but should not be limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like.

Although the amount of the coupling agent used is not particularly limited, it is preferably 0.01 to 0.50 mol, more preferably 0.03 to 0.30 mol relative to 1 mol of polymerization active terminals left active after the addition of the polymerization reaction terminator in the second step.

In the production method according to the present invention, before the polymerization reaction terminator is added to terminate the polymerization reaction, a modifier may be added to the polymerization reaction system to introduce a modifying group into the polymer chains having a polymerization active terminal. The modifier to be used can be those listed above as the modifier for forming a modifying group which can be contained in the conjugated diene-based polymer according to the present invention.

An antioxidant such as a phenol-based stabilizer, a phosphorus-based stabilizer, or a sulfur-based stabilizer, a crumb forming agent, a scale inhibitor, and the like are added, as needed, to the reaction solution of the conjugated diene-based polymer prepared as above. Subsequently, the polymerization solvent is separated from the reaction solution by direct drying or steam stripping to recover a solid conjugated diene-based rubber. The conjugated diene-based polymer may be recovered as an oil extended rubber by further mixing an extender oil as needed. Examples of the extender oil include petroleum-based softening agents such as paraffin-based softening agents, aromatic softening agents, and naphthene-based softening agents, plant-derived softening agents, fatty acids, and the like. If a petroleum-based softening agent is used, the content of polycyclic aromatic compounds extracted by the method of IP346 (the test method specified by THE INSTITUTE of PETROLEUM, UK) is preferably less than 3%. If the extender oil is used, the amount thereof to be used is usually 5 to 100 parts by weight relative to 100 parts by weight of the conjugated diene-based polymer.

Examples of a phenol-based stabilizer added to the solution of the conjugated diene-based polymer according to the present invention include 1'-hydroxy[2,2'-ethylidenebis[4,6-bis(1,1-dimethylpropyl)benzen]]-1-yl acrylate,2-tert-butyl-4-methyl-6-(2-hydroxy-3-tert-butyl-5-methylbenzyl)phenyl acrylate, 2,6-di-tert-butyl-p-cresol, pentaerythritoltetrakis [3-(3,5-di-tert-butyl-4-hydroxyphenyl)propionate], octadecyl-3-(3,5-di-tert-butyl-4-hydroxyphenyl)-propionate, 4,6-bis(octathiomethyl)-o-cresol, and the like. Examples of a sulfur-based stabilizer include didodecyl-3,3'-thiodipropionate, bis[3-(dodecylthio)propionic acid]2,2-bis[[3-(dodecylthio)-1-oxopropyloxy]methyl]-1,3-propanediyl, ditridecyl-3,3'-thiodipropionate, and the like. Examples of a phosphorus-based stabilizer include tris(2,4-di-tert-butylphenyl) phosphite, and

the like.

These stabilizers may be used alone or in combination. For example, the phenol-based stabilizer can be used in combination with another stabilizer. Examples of a combination of two stabilizers include a combination of 2-tert-butyl-4-methyl-6-(2-hydroxy-3-tert-butyl-5-methylbenzyl)phenyl acrylate with bis[3-(dodecylthio)propionic acid]2,2-bis[[3-(dodecylthio)-1-oxopropyloxy]methyl]-1,3-propanediyl, a combination of 1'-hydroxy[2,2'-ethylidenebis[4,6-bis(1,1-dimethylpropyl)benzen]]-1-yl acrylate with bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with 2,6-di-tert-butyl-p-cresol, a combination of 4, 6-bis(octathiomethyl)-o-cresol with 2-tert-butyl-4-methyl-6-(2-hydroxy-3-tert-butyl-5-methylbenzyl)phenyl acrylate, a combination of 4,6-bis(octathiomethyl)-o-cresol with 1'-hydroxy[2,2'-ethylidenebis[4,6-bis(1,1-dimethylpropyl)benzen]]-1-yl acrylate, a combination of 4,6-bis(octathiomethyl)-o-cresol with bis[3-(dodecylthio)propionic acid]2,2-bis[[3-(dodecylthio)-1-oxopropyloxy]methyl]-1,3-propanediyl, a combination of 4, 6-bis(octathiomethyl)-o-cresol with didodecyl-3,3'-thiodipropionate, and the like.

Examples of a combination of three stabilizers include a combination of 4,6-bis(octathiomethyl)-o-cresol with 1'-hydroxy[2,2'-ethylidenebis[4,6-bis(1,1-dimethylpropyl)benzen]]-1-yl acrylate and didodecyl-3,3'-thiodipropionate, a combination of 4,6-bis(octathiomethyl)-o-cresol with 2-tert-butyl-4-methyl-6-(2-hydroxy-3-tert-butyl-5-methylbenzyl)phenyl acrylate and bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with 2,6-di-tert-butyl-p-cresol and bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with 1'-hydroxy[2,2'-ethylidenebis[4,6-bis(1,1-dimethylpropyl)benzen]]-1-yl acrylate and bis[3-(dodecylthio)propionic acid]2,2-bis[[3-(dodecylthio)-1-oxopropyloxy]methyl]-1,3-propanediyl, and the like.

<Conjugated diene-based polymer composition>

The conjugated diene-based polymer composition according to the present invention is a composition comprising the above-mentioned conjugated diene-based polymer according to the present invention and a filler.

The conjugated diene-based polymer composition according to the present invention may contain other rubbers than the above-mentioned conjugated diene-based polymer according to the present invention. Examples of the other rubbers than the conjugated diene-based polymer include natural rubbers (those may be reformed natural rubbers such as epoxidized natural rubbers (ENR), hydrogenated natural rubbers (HNR), deproteinized natural rubbers (DPNR), high purity natural rubbers (UPNR), and grafted natural rubbers), polyisoprene rubbers, emulsion polymerized styrene-butadiene copolymer rubbers, solution polymerized styrene-butadiene copolymer rubbers, and polybutadiene rubbers (those may be high-cis-BR or low-cis-BR, or may be polybutadiene rubbers containing crystal fibers made from 1,2-polybutadiene polymer), styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, nitrile isoprene rubbers, and the like. Among these, preferred are natural rubbers, polyisoprene rubbers, polybutadiene rubbers, and solution polymerized styrene-butadiene copolymer rubbers, and more preferred are polybutadiene rubbers and natural rubbers. These polymers may be used alone or in combination, for example, natural rubber with polybutadiene rubber or natural rubber with styrene-butadiene copolymer rubber.

In the conjugated diene-based polymer composition according to the present invention, the conjugated diene-based polymer according to the present invention occupies preferably 10 to 100% by weight, more preferably 50 to 100% by weight, still more preferably 75 to 100% by weight of the polymer components in the conjugated diene-based polymer composition. When the conjugated diene-based rubber according to the present invention is contained in the polymer components in such a proportion, sufficiently high wet grip properties and driving stability can be obtained.

The conjugated diene-based polymer composition according to the present invention preferably contains a resin. Examples of the resin include cyclopentadiene resins, aromatic resins, terpene resins, petroleum resins, acrylic resins, and the like. The resin may be hydrogenated. These may be used alone or in combination.

Although the content of the resin is not particularly limited, it is preferably 3 to 50 parts by weight, more preferably 5 to 30 parts by weight relative to 100 parts by weight of the rubber components to improve the processability and the driving stability and avoid a reduction in wear resistance and the like.

The conjugated diene-based polymer composition according to the present invention preferably contains a liquid diene-based polymer. Examples of the liquid diene-based polymer include liquid isoprene rubber, liquid butadiene rubber, liquid styrene butadiene rubber, liquid ethylene propylene rubber, liquid nitrile rubber, liquid chloroprene rubber, liquid acrylic rubber, liquid epichlorohydrin rubber, and the like. Among these, preferred are liquid isoprene rubber, liquid butadiene rubber, and liquid styrene butadiene rubber. The liquid diene-based polymer may have the main chain or terminal modified with a polar group. These may be used alone or in combination.

The liquid diene-based polymer has a weight average molecular weight of preferably 1,000 or more, more preferably 2,000 or more, still more preferably 3,000 or more. The liquid diene-based polymer has a weight average

molecular weight of preferably 100,000 or less, more preferably 90,000 or less, still more preferably 80,000 or less. The weight average molecular weight of the liquid rubber is determined against standard polystyrenes in measurement by gel permeation chromatography (GPC).

The content of the liquid diene-based polymer is preferably 1 part by weight or more and less than 100 parts by weight relative to 100 parts by weight of the rubber components.

Examples of the filler include silica, calcium silicate, aluminum silicate, carbon black, calcium carbonate, talc, aluminum hydroxide, alumina, clay, mica, and the like. Among these, preferred are carbon black and silica, and more preferred is silica because these can further enhance the fuel efficiency. These may be used alone or in combination.

Example of silica include fumed silica, wet process silica, colloidal silica, precipitated silica, calcium silicate, aluminum silicate, and the like. Among these, preferred is wet white carbon containing hydrous silicic acid as the main component. A carbon-silica dual phase filler comprising carbon black and silica carried on the surface thereof may also be used. These silicas may be used alone or in combination. The nitrogen adsorption specific surface area (measured by the BET method according to ASTM D3037-81) of silica used is preferably 20 to 400 $m^2/g$, more preferably 50 to 220 $m^2/g$, particularly preferably 80 to 170 $m^2/g$. The silica preferably has a pH of 5 to 10.

As the silica, a variety of commercially available silicas can be used, for example. Examples thereof include "Hi-Sil 210", "Hi-Sil 233", and "Hi-Sil 243LD" available from PPG Industries; "Zeosil 1115MP", "Zeosil 1165MP", and "Zeosil 165GR" available from Solvay S.A.; "ULTRASIL VN2" and "ULTRASIL VN3" available from EVONIK AG; "NIPSIL VN3", "NIPSIL AQ", "NIPSIL ER", and "NIPSIL RS-150" available from TOSOH SILICA CORPORATION; and the like.

Examples of carbon blacks include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon blacks can be used alone or in combination.

The compounding amount of the filler in the conjugated diene-based polymer composition according to the present invention is preferably 10 to 250 parts by weight, more preferably 15 to 150 parts by weight, still more preferably 20 to 130 parts by weight, particularly preferably 45 to 80 parts by weight relative to 100 parts by weight of the polymer components in the conjugated diene-based polymer composition. When the compounding amount of silica falls within these ranges above, sufficient processability is obtained, and the fuel efficiency can be further improved.

To further improve the wet grip properties and the driving stability, the conjugated diene-based polymer composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl)disulfide, bis(3-triethoxysilylpropyl)trisulfide, bis(3-(triethoxysilyl)propyl)tetrasulfide, γ-mercaptopropyltriethoxysilane, 3-[ethoxy-bis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanate propyltriethoxysilane, vinyltriethoxysilane, N-(β-aminoethyl)-γ-aminopropyltrimethoxysilane, 3-trimethoxysilylpropylmethacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, NXT-Z45, and NXT available from Momentive Performance Materials Inc., and Si69, Si75, and VP Si363 available from Evonick Degussa AG can also be used. These silane coupling agents can be used alone or in combination. One or two or more of these silane coupling agents may be preliminarily formed into an oligomer, and may be used in the oligomer form. The amount of the silane coupling agent to be compounded is preferably 0.1 to 30 parts by weight, more preferably 1 to 15 parts by weight relative to 100 parts by weight of the filler.

Preferably, the conjugated diene-based polymer composition according to the present invention further contains a cross-linking agent. Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredient in the conjugated diene-based polymer composition.

Furthermore, besides the ingredients described above, the conjugated diene-based polymer composition according to the present invention can be compounded with a compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as the cross-linking agent, use in combination with a cross-linking accelerator and a cross-linking activator is preferred. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the polymer ingredient in the conjugated diene-based polymer composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredient in the conjugated diene-based polymer composition.

To obtain the conjugated diene-based polymer composition according to the present invention, the ingredients can be kneaded according to an ordinary method. For example, the target composition can be obtained by kneading ingredients excluding thermally unstable ingredients such as the cross-linking agent and the cross-linking accelerator with the conjugated diene-based rubber, and then mixing the thermally unstable ingredients such as the cross-linking agent and the cross-linking accelerator with the kneaded product. The kneading temperature during kneading of the ingredients excluding the thermally unstable ingredients with the conjugated diene-based rubber is preferably 80 to 200°C, more preferably 120 to 180°C, and the kneading time is preferably 30 seconds to 30 minutes. The kneaded product is mixed with the thermally unstable ingredients after it is cooled to usually 100°C or less, preferably 80°C or less.

<Cross-linked rubber>

The cross-linked rubber according to the present invention is prepared by cross-linking the above-mentioned conjugated diene-based polymer composition according to the present invention.

The cross-linked rubber according to the present invention can be produced using the conjugated diene-based polymer composition according to the present invention, for example, by shaping the rubber composition with a molding machine having a desired shape, such as an extruder, an injection molding machine, a press, or a roll, and performing a cross-linking reaction by heating to provide a cross-linked rubber having a fixed shape. In this case, the rubber composition may be preliminarily shaped and then cross-linked, or may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber such as press heating, steam heating, oven heating, or hot air heating can be appropriately selected.

The cross-linked rubber according to the present invention thus prepared has high wet grip properties, high driving stability, high tensile strength, and excellent elongation because it is prepared from the above-mentioned conjugated diene-based polymer according to the present invention. For this reason, owing to its excellent properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film buffer agents; shoe soles; rubber shoes; golf balls; toys; and the like, for example. In particular, because of its high wet grip properties, high driving stability, high tensile strength, and excellent elongation, the cross-linked rubber according to the present invention is suitable for a material for tires.

EXAMPLES

Hereinafter, the present invention will be described based on more detailed examples, but the present invention is not limited to these examples. Hereinafter, the term "parts" is weight-based unless otherwise specified. Tests and evaluations conformed to the followings.

<Styrene unit content and vinyl bond content>

The styrene unit content (% by weight) and the vinyl bond content (mol%) in the conjugated diene monomer unit were determined using $^{1}$H-NMR in accordance with JIS K6239:2007.

<Mooney viscosity of conjugated diene-based polymer>

For modified conjugated diene-based polymers, the Mooney viscosity (ML1+4) was measured in accordance with JIS K6300-1:2013 under the following conditions:

· Test temperature: 100°C or 125°C
· Type of rotor: L-shape
· Tester used: available from SHIMADZU Corporation, SHIMADZU Mooney Viscometer SMV-300J

<Entire weight average molecular weight (Mw), entire molecular weight distribution (Mw/Mn), number of peaks in molecular weight distribution curve, peak top molecular weight of each peak, and area of component giving each peak>

Sample solutions containing modified conjugated diene-based polymers (1) to (17) were measured by gel permeation chromatography (GPC) using an RI detector, and the molecular weight distribution curves of the modified conjugated diene-based polymers were obtained. Based on the resulting molecular weight distribution curves of the modified conjugated diene-based polymers, the weight average molecular weight (Mw) and molecular weight distribution (Mw/Mn) of the entire modified conjugated diene-based polymer were determined. The weight average molecular weight (Mw) and the number average molecular weight (Mn) were determined as values against polystyrene standards. Specifically, GPC was performed under the following measurement conditions:

Measurement apparatus: high performance liquid chromatograph (available from Tosoh Corporation, trade name "HLC-8320")
Columns: available from Tosoh Corporation, two polystyrene-based columns, trade name "TSKgel SuperHM-H", connected in series.
Detector: differential refractive index (RI)
Eluent: 0.9 Vol% of 2-(ethylamino)ethanol (available from FUJIFILM Wako Chemical Corporation, special grade) was added to tetrahydrofuran (available from Kanto Chemical Co., Inc., special grade, stabilizer free).
Column temperature: 40°C
Flow rate: 0.6 mL/min
Sample solution concentration: 1.0 mg/mL
Solvent for sample solution: tetrahydrofuran (available from Kanto Chemical Co., Inc., special grade, stabilizer free)
Sample solution injection amount: 5 μL

Method of calculating molecular weight: Ten standard polystyrenes having known molecular weights were analyzed by GPC, and for the standard polystyrenes, the common logarithm of the molecular weight of each standard polystyrene was plotted against the retention time of the standard polystyrene. A cubic polynomial approximate equation was calculated from the obtained plot, and a calibration curve was created. Each of the conjugated diene-based polymers was analyzed by GPC, and the molecular weight of the conjugated diene-based polymer was determined as a value against the polystyrene standards from the retention time and the calibration curve obtained.
Standard polystyrenes: F-700, F-288, F-128, F-80, F-40, F-20, F-4, F-2, A-5000, A-2500 (all available from Tosoh Corporation, trade name "TSKgel Standard Polystyrenes")
For the modified conjugated diene-based polymers prepared, the molecular weight distribution curve of each modified conjugated diene-based polymer was divided into regions each of which was defined by the baseline or local minimum values and had one local maximum value. The peak areas of the divided regions were determined, and when the total peak area of the molecular weight distribution curve of the modified conjugated diene-based polymer was regarded as 100%, the number of regions having a peak area of 1% or more was determined as the number of peaks at the molecular weight. Furthermore, for the peaks in the divided regions (limited to only the regions having a peak area of 1% or more), the peak top molecular weight (molecular weight having a local maximum value in the region) and the peak area ratio were determined.
Among the peaks detected at a peak top molecular weight of 400,000 or less, the peak having the largest area was defined as low molecular weight molecule peak (LP). Among the remaining peaks having a peak top molecular weight of more than 400,000 after the low molecular weight molecule peak (LP) was excluded, a peak having the largest area was defined as a high molecular weight molecule peak (HP). Thus, the peak top molecular weight (molecular weight having a local maximum value in each region, MP) of the low molecular weight molecule peak (LP) and that of the high molecular weight molecule peak (HP), and the ratios of the peak areas of these peaks were determined.

<Difference in aromatic vinyl monomer unit content (difference ΔA = (aromatic vinyl monomer unit content ($A_L$) in low molecular weight component (L)) - (aromatic vinyl monomer unit content ($A_H$) in high molecular weight component (H)))>

The sample solutions containing the modified conjugated diene-based polymers (1) to (17) were each measured by GPC using a UV detector and an RI detector, and a UV elution profile u(t) and an RI elution profile c(t) against an elution time t were obtained. Here, the UV elution profile u(t) and the RI elution profile c(t) each indicate a curve obtained by removing regions having a molecular weight of less than 5000 and further removing the peak of the internal standard polystyrene. The concentration increment (dn/dc) of the refractive index of the solute was 0.185 mL/mg for the aromatic vinyl monomer and 0.13 mL/mg for the non-aromatic vinyl monomer (conjugated diene monomer), and the absorption coefficient (dA/dc) was 1 for the aromatic vinyl monomer and 0 for the non-aromatic vinyl monomer (conjugated diene monomer). From the ratio u(t)/c(t) of the UV elution profile to the RI elution profile, an aromatic vinyl monomer unit content curve a(t) was obtained. When the total area in c(t) was regarded as 100%, elution times t5, t50, and t95 at which the area determined by accumulation of area in c(t) from the shorter elution time side was 5%, 50%, and 95%, respectively, were calculated. The aromatic vinyl monomer unit content ($A_H$) in the high molecular weight component (H) detected in a short elution time and the aromatic vinyl monomer unit content ($A_L$) in the low molecular weight component (L) detected in a long elution time were calculated from the following Expressions (1) and (2):

[Math. 1]

$$A_H = \frac{\int_{t_5}^{t_{50}} a(t)c(t)dt}{\int_{t_5}^{t_{50}} c(t)dt} \quad (1)$$

$$A_L = \frac{\int_{t_{50}}^{t_{95}} a(t)c(t)dt}{\int_{t_{50}}^{t_{95}} c(t)dt} \quad (2)$$

Then, the difference ΔA between the aromatic vinyl monomer unit contents was calculated from the expression "difference ΔA = (aromatic vinyl monomer unit content ($A_L$) in low molecular weight component (L)) - (aromatic vinyl monomer unit content ($A_H$) in high molecular weight component (H))".

GPC measurement using a UV detector and an RI detector was performed under the following conditions:

(GPC apparatus and software)

(i) LC apparatus: HLC-8220GPC (available from Tosoh Corporation)
(ii) Detector: UV-8220 (available from Tosoh Corporation) and TDA302 (built-in RI detector, available from Viscotek Corporation) connected in series
(iii) Analysis software: OmniSEC ver. 5.12
(iv) Measurement conditions

GPC columns: two columns of Plus Pore series Poly Pore 7.5 mm I.D. × 300 mm (available from Agilent Technologies, Inc.)
Mobile phase: 25 g of 2-(ethylamino)ethanol (available from FUJIFILM Wako Chemical Corporation, special grade) was added to 3 L of tetrahydrofuran (available from Kanto Chemical Co., Inc., special grade, stabilizer free).
Flow rate: 1 mL/min
Column oven temperature: 35°C
Detection: differential refractive index detector (RID), UV detector RID cell temperature: 35°C
Wavelength for UV detection: 260 nm
Sample solution injection amount: 100 μL
Calibration standard substance for GPC column: PStQuick Kit-H

(available from Tosoh Corporation)

Standard substance for calibration of vinyl aromatic monomer content (vinyl aromatic monomer content: 100 wt%): F-10 (available from Tosoh Corporation)
Standard substance for adjustment of dwell volume in UV detector and RI detector: F-10 (available from Tosoh Corporation)

(v) Conditions for preparation of sample solution

Solvent: 5 mg of standard polystyrene A5000 (available from Tosoh Corporation) having a molecular weight of 5000, as an internal standard, was added to 20 mL of tetrahydrofuran (available from Kanto Chemical Co., Inc., special grade, stabilizer free).

Sample solution concentration: 0.5 mg/mL
Dissolving auto-agitator: DF-8020 (available from Tosoh Corporation)
Dissolution conditions: 10 mg of a sample and 20 mL of a solvent were added to a screw vial and sealed tightly, followed by stirring at a stirring speed of 60 reciprocations/min by DF-8020 at room temperature for 120 minutes. Filtration was performed by a syringe equipped with a filtering filter.
Filtering filter: Millex-LG, pore size of 0.45 μm, hydrophilic, PTFE, filter diameter of 25 mm (available from Merck KGaA)

<Ionic strength index>

For the modified conjugated diene-based polymers (1) to (17), a sample solution containing each modified conjugated diene-based polymer and an internal standard polystyrene was measured by GPC using a styrene-based column and by GPC using a cation exchange column, and based on these results, the ionic strength index was calculated from the following Expression (3):

ionic strength index (%) = $\{1 - (A_{CX}/B_{CX}) \times (B_{sty}/A_{sty})\} \times 100$ (3)
$A_{CX}$: The peak area in the molecular weight distribution curve of the conjugated diene-based polymer obtained with measurement by GPC using a cation exchange column
$B_{CX}$: The peak area of the peak of an internal standard polystyrene obtained with measurement by GPC using a cation exchange column
$B_{sty}$: The peak area of the peak of an internal standard polystyrene obtained with measurement by GPC using a styrene-based column
$A_{sty}$: The peak area in the molecular weight distribution curve of the conjugated diene-based polymer obtained with measurement by GPC using a styrene-based column
Here, in the definitions of $A_{CX}$ and $A_{sty}$, the peak area in the molecular weight distribution curve of the conjugated diene-based polymer refers to a peak area in the molecular weight distribution curve obtained by removing a region having a molecular weight of less than 5000 from the molecular weight distribution curve obtained by the measurement and further removing the peak of the internal standard polystyrene therefrom.

GPC using a styrene-based column was performed under the following conditions.

(GPC apparatus and software)

(i) Liquid delivery pump: LC-20AD (available from SHIMADZU Corporation)
(ii) Degasser: DGU-20A3 (available from SHIMADZU Corporation)
(iii) Autosampler: SIL-20A HT (available from SHIMADZU Corporation)
(iv) Column oven: CTO-20A (available from SHIMADZU Corporation)
(v) Differential refractive index detector (RID): RID-10A (available from SHIMADZU Corporation)
(vi) System controller: CBM-20A (available from SHIMADZU Corporation)
(vii) Measurement and analysis software: LC solution ver. 1.24 SP1
(viii) Measurement conditions

GPC columns: two columns of Plus Pore series Poly Pore 7.5 mm I.D. × 300 mm (available from Agilent Technologies, Inc.)
Mobile phase: 25 g of 2-(ethylamino)ethanol (available from FUJIFILM Wako Chemical Corporation, special grade) was added to 3 L of tetrahydrofuran (available from Kanto Chemical Co., Inc., special grade, stabilizer free).
Flow rate: 1 mL/min
Column oven temperature: 35°C
Detection: differential refractive index detector (RID)
RID cell temperature: 35°C
Sample solution injection amount: 100 μL
Calibration standard substance for GPC column: PStQuick Kit-H

(available from Tosoh Corporation)

(ix) Conditions for preparing sample solution

Solvent: 5 mg of standard polystyrene A5000 (available from Tosoh Corporation) having a molecular weight of 5000, as an internal standard, was added to 20 mL of tetrahydrofuran (available from Kanto Chemical Co., Inc., special grade, stabilizer free).
Sample solution concentration: 0.5 mg/mL
Dissolving auto-agitator: DF-8020 (available from Tosoh Corporation)
Dissolution conditions: 10 mg of a sample and 20 mL of a solvent were added to a screw vial and sealed tightly, followed by stirring at a stirring speed of 60 reciprocations/min by DF-8020 at room temperature for 120 minutes. Filtration was performed by a syringe equipped with a filtering filter.
Filtering filter: Millex-LG, pore size of 0.45 μm, hydrophilic, PTFE, filter diameter of 25 mm (available from Merck KGaA)

GPC using a cation exchange column was performed under the following conditions. The measurement solution used in the measurement by GPC using a cation exchange column was the same measurement solution used in the measurement by GPC using a styrene-based column.

(GPC apparatus and software)

(i) Liquid delivery pump: LC-20AD (available from SHIMADZU Corporation)
(ii) Degasser: DGU-20A3 (available from SHIMADZU Corporation)
(iii) Autosampler: SIL-20A HT (available from SHIMADZU Corporation)
(iv) Column oven: CTO-20A (available from SHIMADZU Corporation)
(v) Differential refractive index detector (RID): RID-10A (available from SHIMADZU Corporation)
(vi) System controller: CBM-20A (available from SHIMADZU Corporation)
(vii) Measurement and analysis software: LC solution ver. 1.24 SP1
(viii) Measurement conditions

GPC column: two Inertcil CX columns (4.6 × 250 mm, available from GL Sciences Inc.)
Mobile phase: tetrahydrofuran (available from Kanto Chemical Co., Inc., special grade, stabilizer free)
Flow rate: 0.7 mL/min
Column oven temperature: 35°C
Detection: differential refractive index detector (RID)
RID cell temperature: 35°C
Sample solution injection amount: 100 μL
Calibration standard substance for GPC column: PStQuick Kit-H

(available from Tosoh Corporation)

(ix) Conditions for preparing sample solution

Solvent: 5 mg of standard polystyrene A5000 (available from Tosoh Corporation) having a molecular weight of 5000, as an internal standard, was added to 20 mL of tetrahydrofuran (available from Kanto Chemical Co., Inc., special grade, stabilizer free).
Sample solution concentration: 0.5 mg/mL
Dissolving auto-agitator: DF-8020 (available from Tosoh Corporation)
Dissolution conditions: 10 mg of a sample and 20 mL of a solvent were added to a screw vial and sealed tightly, followed by stirring at a stirring speed of 60 reciprocations/min by DF-8020 at room temperature for 120 minutes. Filtration was performed by a syringe equipped with a filtering filter.
Filtering filter: Millex-LG, pore size of 0.45 μm, hydrophilic, PTFE, filter diameter of 25 mm (available from Merck KGaA)

<Compound Mooney viscosity ($ML_{1+4}$), processability>

In accordance with JIS K6300 (1994), the Mooney viscosity (compound Mooney viscosity) of the conjugated diene-based polymer composition was measured at 130°C.

The result of measurement of the compound Mooney viscosity was calculated as an index in which the compound Mooney viscosity in an example with a close aromatic vinyl unit content was regarded as 100, and was defined as the value of processability. Specifically, the results of Comparative Examples 1 to 3 were each calculated as an index where Example 1 was regarded as 100, the results of Example 2 and Comparative Examples 4 to 6 were each calculated as an index where Example 3 was regarded as 100, the results of Example 4 and Comparative Examples 7 to 9 were each calculated as an index where Example 5 was regarded as 100, and the results of Example 6 and Comparative Example 10 were each calculated as an index where Example 7 was regarded as 100. These results were defined as the value of processability. A greater value of processability indicates that a rubber composition to be obtained has higher processability.

<Loss tangent (tanδ (0°C), wet grip properties>

Each of cross-linked rubber sheets was punched out into a test piece in a strip shape having a width of 1 mm or 2 mm and a length of 40 mm, and the test piece was fed to a test. Using a rheometer (available from Ueshima Seisakusho Co., Ltd.), the loss tangent (tanδ (0°C)) of the test piece at a temperature of 0°C was measured at a frequency of 10 Hz, an initial elongation of 10%, and a distortion amplitude of 2.50%.

The result of measurement of the loss tangent (tanδ (0°C) was calculated as an index in which the loss tangent (tanδ (0°C) in an example with a close aromatic vinyl unit content was regarded as 100, and was defined as the value of wet grip properties. Specifically, the results of Comparative Examples 1 to 3 were each calculated as an index where Example 1 was regarded as 100, the results of Example 3 and Comparative Examples 4 to 6 were each calculated as an index where Example 2 was regarded as 100, the results of Example 5 and Comparative Examples 7 to 9 were each calculated where Example 4 was regarded as 100, and the results of Example 7 and Comparative Example 10 were each calculated as an index where Example 6 was regarded as 100. These results were defined as a value of wet grip properties. A greater value of the wet grip properties indicates that a cross-linked rubber to be obtained has higher wet grip properties.

<Storage modulus (E' (60°C)), driving stability>

Each of cross-linked rubber sheets was punched out into a test piece in a strip shape having a width of 1 mm or 2 mm and a length of 40 mm, and the test piece was fed to a test. Using a rheometer (available from Ueshima Seisakusho Co., Ltd.), the storage modulus (E'(60°C)) of the test piece at a temperature of 60°C was measured at a frequency of 10 Hz, an initial elongation of 10%, and a distortion amplitude of 1.00%.

The result of measurement of the storage modulus (E' (60°C)) was calculated as an index in which the storage modulus (E' (60°C)) in an example with a close aromatic vinyl unit content was regarded as 100, and was defined as the value of driving stability. Specifically, the results of Comparative Examples 1 to 3 were each calculated as an index where Example 1 was regarded as 100, the results of Example 3 and Comparative Examples 4 to 6 were each calculated as an index where Example 2 was regarded as 100, the results of Example 4 and Comparative Examples 7 to 9 were each calculated as an index where Example 5 was regarded as 100, and the results of Example 6 and Comparative Example 10 were each calculated as an index where Example 7 was regarded as 100. These results were defined as the value of driving stability. A greater value of driving stability indicates that a cross-linked rubber to be obtained has higher driving

stability.

<Tensile strength and elongation>

Cross-linked rubber sheets were measured for tensile strength (MPa) and elongation (%) at break in accordance with JIS K6251:2010 under the following conditions.

The results of measurement of tensile strength and elongation were calculated as indices in which the tensile strength and elongation in an example with a close aromatic vinyl unit content were regarded as 100, respectively. Specifically, the results in Comparative Examples 1 to 3 were calculated as indices where Example 1 was regarded as 100, the results in Example 3 and Comparative Examples 4 to 6 were calculated as indices where Example 2 was regarded as 100, the results in Example 5 and Comparative Examples 7 to 9 were calculated as indices where Example 4 was regarded as 100, and the results in Example 7 and Comparative Example 10 were calculated as indices where Example 6 was regarded as 100. Greater index values of tensile strength and elongation indicate that a cross-linked rubber to be obtained has higher strength properties.

· Method of preparing test piece: A sheet was prepared by press cross-linking, followed by punching out

· Shape of test piece: dumbbell shape #3
· Test piece sampling direction: direction parallel to grain · The number of test pieces: 3
· Measurement temperature: 23°C
· Test rate: 500 mm/min
· Tester used: available from ALPHA TECHNOLOGIES, TENSOMETER 10k · Tester capacity: load cell type, 1 kN

[Synthetic Example 1]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 452 g of 1,3-butadiene, 194 g of styrene, 8.02 mL of tetrahydrofuran, and 0.75 mL of ethylene glycol dibutyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.98 mmol of normal butyllithium was added to start polymerization at 45°C. The temperature was raised from 45°C to 70°C over 80 minutes, and subsequently the temperature was maintained at 70°C. After 10 minutes from the start of the polymerization reaction, 239 g of 1,3-butadiene was continuously added over 80 minutes. After 90 minutes from the start of the polymerization reaction, 400 g of 1,3-butadiene was continuously added over 80 minutes. When the polymerization conversion ratio reached 49% (after 95 minutes from the start of the polymerization reaction), 5.80 mmol of normal butyllithium was added. The temperature at this point of time was raised from 60°C to 70°C over 65 minutes, and the temperature was maintained at 70°C. Subsequently, after 200 minutes from the start of the polymerization reaction, it was verified that the polymerization conversion ratio reached a range of 95% to 100%. Then, 0.39 mmol of silicon tetrachloride was added, and reacted for 20 minutes. Subsequently, 11.17 mmol of [3-(diethylamino)propyl]trimethoxysilane was added, and reacted for 20 minutes. Subsequently, 16.76 mmol of normal butyllithium was added, and reacted for 20 minutes. Subsequently, 1.5 equivalents of methanol relative to the total lithium amount in the autoclave was added as a polymerization terminator, giving a solution containing a modified conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (1).

[Synthetic Example 2]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 512 g of 1,3-butadiene, 220 g of styrene, 8.02 mL of tetrahydrofuran, and 0.65 mL of ethylene glycol dibutyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.98 mmol of normal butyllithium was added to start polymerization at 45°C. The temperature was raised from 45°C to 70°C over 157 minutes, and subsequently the temperature was maintained at 70°C. After 5 minutes from the start of the polymerization reaction, 271 g of 1,3-butadiene

was continuously added over 80 minutes. After 85 minutes from the start of the polymerization reaction, 453 g of 1,3-butadiene was continuously added over 80 minutes. When the polymerization conversion ratio reached 60% (after 115 minutes from the start of the polymerization reaction), 4.62 mmol of normal butyllithium was added. The temperature at this point of time was raised from 60°C to 70°C over 42 minutes, and the temperature was maintained at 70°C. Subsequently, after 185 minutes from the start of the polymerization reaction, it was verified that the polymerization conversion ratio reached a range of 95% to 100%, 1.5 equivalents of methanol relative to the total lithium amount in the autoclave was added as a polymerization terminator, giving a solution containing a conjugated diene-based polymer. To this solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.40 parts of pentaerythrityltetrakis(3-laurylthiopropionate) (available from Sumitomo Chemical Co., Ltd., trade name: Sumilizer TP-D) relative to 100 parts of the conjugated diene-based polymer were added as antioxidants, giving a polymer solution.

Most of volatile contents of the resulting polymerization solution was evaporated at ambient temperature in 24 hours, followed by drying under reduced pressure at 55°C for 12 hours, giving a modified conjugated diene-based polymer (2).

[Synthetic Example 3]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 512 g of 1,3-butadiene, 220 g of styrene, 8.02 mL of tetrahydrofuran, and 0.65 mL of ethylene glycol dibutyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.68 mmol of normal butyllithium was added to start polymerization at 45°C. The temperature was raised from 45°C to 70°C over 144 minutes, and subsequently the temperature was maintained at 70°C. After 5 minutes from the start of the polymerization reaction, 271 g of 1,3-butadiene was continuously added over 80 minutes. After 85 minutes from the start of the polymerization reaction, 453 g of 1,3-butadiene was continuously added over 80 minutes. When the polymerization conversion ratio reached 51% (after 102 minutes from the start of the polymerization reaction), 6.72 mmol of normal butyllithium was added. The temperature at this point of time was raised from 60°C to 70°C over 42 minutes, and the temperature was maintained at 70°C. Subsequently, after 185 minutes from the start of the polymerization reaction, it was verified that the polymerization conversion ratio reached a range of 95% to 100%. Then, 1.68 mmol of N-(3-dimethylaminopropyl)acrylamide was added, and reacted for 15 minutes. Subsequently, 6.72 mmol of [3-(diethylamino)propyl]trimethoxysilane was added, and reacted for 15 minutes. Subsequently, 10.08 mmol of normal butyllithium was added, and reacted for 15 minutes. Subsequently, 1.5 equivalents of methanol relative to the total lithium amount in the autoclave was added as a polymerization terminator, giving a solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.40 parts pentaerythrityltetrakis(3-laurylthiopropionate) (available from Sumitomo Chemical Co., Ltd., trade name: Sumilizer TP-D) relative to 100 parts of the conjugated diene-based polymer were added as antioxidants, giving a polymer solution.

Most of volatile contents of the resulting polymerization solution was evaporated at ambient temperature in 24 hours, followed by drying under reduced pressure at 55°C for 12 hours, giving a modified conjugated diene-based polymer (3).

[Synthetic Example 4]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 591 g of 1,3-butadiene, 253 g of styrene, 8.02 mL of tetrahydrofuran, and 0.80 mL of ethylene glycol dibutyl ether were charged into an autoclave equipped with a stirrer having an inner volume of 20 L. A small amount of normal butyllithium as a scavenger was added to the autoclave to preliminarily detoxify impurities deactivating polymerization. Thereafter, 10.90 mmol of normal butyllithium was added to start polymerization at 45°C. The temperature was raised from 45°C to 70°C over 80 minutes, and subsequently the temperature was maintained at 70°C. After 10 minutes from the start of the polymerization reaction, 312 g of 1,3-butadiene was continuously added over 80 minutes. When the polymerization conversion ratio reached 48% (after 55 minutes from the start of the polymerization reaction), 10.15 mmol of 1-butanol was added. After 90 minutes from the start of the polymerization reaction, 523 g of 1,3-butadiene was continuously added over 80 minutes. Subsequently, after 320 minutes from the start of the polymerization reaction, it was verified that the polymerization conversion ratio reached a range of 95% to 100%. Then, 0.05 mmol of silicon tetrachloride was added, and reacted for 10 minutes. Subsequently, 1.00 mmol of [3-(diethylamino)propyl]trimethoxysilane was added, and reacted for 20 minutes. Subsequently, 1.5 mmol of normal butyllithium was added, and reacted for 15 minutes. Subsequently, 1.5 equivalents of methanol relative to the total lithium

amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidant, giving a polymer solution. Most of volatile contents of the resulting polymerization solution was evaporated at ambient temperature in 24 hours, followed by drying under reduced pressure at 55°C for 12 hours, giving a modified conjugated diene-based polymer (4).

[Synthetic Example 5]

Under a nitrogen atmosphere, 9.02 kg of industrial hexane (available from Sumitomo Chemical Co., Ltd., trade name: Hexane (general product), density: 0.68 g/mL), 1.36 kg of cyclohexane, 477.4 g of 1,3-butadiene, 374.7 g of styrene, 8.02 mL of tetrahydrofuran, and 4.48 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.58 mmol of normal butyllithium was added to start polymerization at 45°C. The temperature was raised from 45°C to 60°C over 60 minutes, and subsequently the temperature was maintained at 60°C. After 5 minutes from the start of the polymerization reaction, 233.5 g of 1,3-butadiene was continuously added over 80 minutes. when the polymerization conversion ratio reached 49% (after 68 minutes from the start of the polymerization reaction), 6.32 mmol of normal butyllithium was added. The temperature at this point of time was raised from 60°C to 70°C over 92 minutes, and the temperature was maintained at 70°C. After 85 minutes from the start of the polymerization reaction, 414.4 g of 1,3-butadiene was continuously added over 80 minutes. Subsequently, after 215 minutes from the start of the polymerization reaction, it was verified that the polymerization conversion ratio reached a range of 95% to 100%. Then, 11.85 mmol of [3-(diethylamino)propyl]trimethoxysilane was added, and reacted for 15 minutes. Subsequently, 17.77 mmol of normal butyllithium was added, and reacted for 10 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (5).

[Synthetic Example 6]

Under a nitrogen atmosphere, 9.02 kg of industrial hexane (available from Sumitomo Chemical Co., Ltd., trade name: Hexane (general product), density: 0.68 g/mL), 1.36 kg of cyclohexane, 477.4 g of 1,3-butadiene, 374.7 g of styrene, 8.02 mL of tetrahydrofuran, and 4.48 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.99 mmol of normal butyllithium was added to start polymerization at 45°C. The temperature was raised from 45°C to 60°C over 60 minutes, and subsequently the temperature was maintained at 60°C. After 5 minutes from the start of the polymerization reaction, 233.5 g of 1,3-butadiene was continuously added over 80 minutes. After 85 minutes from the start of the polymerization reaction, 414.4 g of 1,3-butadiene was continuously added over 80 minutes. When the polymerization conversion ratio reached 66% (after 102 minutes from the start of the polymerization reaction), 5.61 mmol of normal butyllithium was added. The temperature at this point of time was raised from 60°C to 70°C over 58 minutes and the temperature was maintained at 70°C. Subsequently, after 200 minutes from the start of the polymerization reaction, it was verified that the polymerization conversion ratio reached a range of 95% to 100%. Then, 11.41 mmol of [3-(diethylamino)propyl]trimethoxysilane was added, and reacted for 15 minutes. Subsequently, 17.11 mmol of normal butyllithium was added, and reacted for 10 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based

polymer (6).

[Synthetic Example 7]

The inside of a stainless steel polymerization reactor equipped with a stirrer having an inner volume of 30 L was replaced by dry nitrogen. Next, 10.2 kg of industrial hexane (available from Sumitomo Chemical Co., Ltd., trade name: Hexane (general product), density: 0.68 g/mL), 712 g of 1,3-butadiene, 388 g of styrene, 8.02 mL of tetrahydrofuran, 3.36 mL of ethylene glycol diethyl ether were charged into the polymerization reactor. A small amount of normal butyllithium as a scavenger was added to the autoclave to preliminarily detoxify impurities deactivating polymerization. Thereafter, 7.87 mmol of piperidine was added, followed by stirring for 1 minute. Then, an n-hexane solution containing 11.24 mmol of normal butyllithium was charged into the polymerization reactor, and polymerization was started at a stirring speed of 160 rpm and 31°C.

764 g of 1,3-butadiene and 168 g of styrene were continuously added over 90 minutes. After 15 minutes from the start of polymerization, 9.2 mmol of bis(diethylamino)methylvinylsilane was added. After 90 minutes from the start of polymerization, further 168 g of 1,3-butadiene was continuously added. Subsequently, after 120 minutes from the start of polymerization, 1.25 mmol of tin tetrachloride was added, and reacted for 15 minutes. Subsequently, 11.1 mmol of N-(3-dimethylaminopropyl)acrylamide was added, and reacted for 10 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (7).

[Synthetic Example 8]

Under a nitrogen atmosphere, 9.02 kg of industrial hexane (available from Sumitomo Chemical Co., Ltd., trade name: Hexane (general product), density: 0.68 g/mL), 1.36 kg of cyclohexane, 477.4 g of 1,3-butadiene, 374.7 g of styrene, 8.02 mL of tetrahydrofuran, and 4.48 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 8.98 mmol of normal butyllithium was added to start polymerization at 45°C. The temperature was raised from 45°C to 70°C over 100 minutes, and subsequently the temperature was maintained at 70°C. After 5 minutes from the start of the polymerization reaction, 233.5 g of 1,3-butadiene was continuously added over 80 minutes. When the polymerization conversion ratio reached 47% (after 30 minutes from the start of the polymerization reaction), 5.47 mmol of 1-butanol was added. After 85 minutes from the start of the polymerization reaction, 414.4 g of 1,3-butadiene was continuously added over 80 minutes. Subsequently, after 255 minutes from the start of the polymerization reaction, it was verified that the polymerization conversion ratio reached a range of 95% to 100%. Then, 21.68 mmol of [3-(diethylamino)propyl]trimethoxysilane was added, and reacted for 15 minutes. Subsequently, 32.52 mmol of normal butyllithium was added, and reacted for 10 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (8).

[Synthetic Example 9]

Under a nitrogen atmosphere, 9.02 kg of industrial hexane (available from Sumitomo Chemical Co., Ltd., trade name: Hexane (general product), density: 0.68 g/mL), 1.36 kg of cyclohexane, 477.4 g of 1,3-butadiene, 374.7 g of styrene, 8.02 mL of tetrahydrofuran, and 4.48 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 6.82 mmol of normal butyllithium was added to start polymerization at 45°C. The temperature was raised from 45°C to 70°C over 100 minutes, and subsequently

the temperature was maintained at 70°C. After 5 minutes from the start of the polymerization reaction, 233.5 g of 1,3-butadiene was continuously added over 80 minutes. When the polymerization conversion ratio reached 50% (after 37 minutes from the start of the polymerization reaction), 4.70 mmol of 1-butanol was added. After 85 minutes from the start of the polymerization reaction, 414.4 g of 1,3-butadiene was continuously added over 80 minutes. Subsequently, after 255 minutes from the start of the polymerization reaction, it was verified that the polymerization conversion ratio reached a range of 95% to 100%. Then, 17.27 mmol of [3-(diethylamino)propyl]trimethoxysilane was added, and reacted for 15 minutes. Subsequently, 25.91 mmol of normal butyllithium was added, and reacted for 10 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (9).

[Synthetic Example 10]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 250 g of 1,3-butadiene, 466 g of styrene, 8.02 mL of tetrahydrofuran, and 20.86 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.94 mmol of normal butyllithium was added to start polymerization at 35°C. The temperature was raised from 35°C to 60°C over 60 minutes, and subsequently the temperature was maintained at 60°C. After the polymerization reaction was started, 150 g of 1,3-butadiene was continuously added over 75 minutes. When the polymerization conversion ratio reached 56% (after 70 minutes from the start of the polymerization reaction), 5.00 mmol of normal butyllithium was added. The temperature was raised from 60°C to 70°C over 100 minutes. After 75 minutes from the start of the polymerization reaction, 300 g of 1,3-butadiene was continuously added over 75 minutes. Subsequently, after 170 minutes from the start of the polymerization reaction, it was verified that the polymerization conversion ratio reached a range of 95% to 100%. Then, 0.35 mmol of silicon tetrachloride was added, and reacted for 10 minutes. Subsequently, 4.94 mmol of [3-(diethylamino)propyl]trimethoxysilane was added, and reacted for 15 minutes. Subsequently, 7.40 mmol of normal butyllithium was added, and reacted for 15 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (10).

[Synthetic Example 11]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 369.6 g of 1,3-butadiene, 688.9 g of styrene, 8.02 mL of tetrahydrofuran, and 18.54 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 1.81 mmol of normal butyllithium was added to start polymerization at 40°C. The temperature was raised from 40°C to 60°C over 60 minutes, and subsequently the temperature was maintained at 60°C. After the polymerization reaction was started, 221.8 g of 1,3-butadiene was continuously added over 75 minutes. When the polymerization conversion ratio reached 53% (after 60 minutes from the start of the polymerization reaction), 5.44 mmol of normal butyllithium was added. The temperature was raised from 60°C to 70°C over 100 minutes. After 75 minutes from the start of the polymerization reaction, 443.5 g of 1,3-butadiene was continuously added over 75 minutes. Subsequently, after 170 minutes from the start of the polymerization reaction, it was verified that the polymerization conversion ratio reached a range of 95% to 100%. Then, 0.36 mmol of silicon tetrachloride was added, and reacted for 10 minutes. Subsequently, 8.71 mmol of [3-(diethylamino)propyl] trimethoxysilane was added, and reacted for 15 minutes. Subsequently, 13.07 mmol of normal butyllithium was added,

and reacted for 15 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (11).

[Synthetic Example 12]

The inside of a stainless steel polymerization reactor equipped with a stirrer having an inner volume of 20 L was replaced by dry nitrogen. Next, 10.2 kg of industrial hexane (available from Sumitomo Chemical Co., Ltd., trade name: Hexane (general product), density: 0.68 g/mL), 357 g of 1,3-butadiene, 244 g of styrene, 11.25 mL of tetrahydrofuran, and 10.94 mL of ethylene glycol diethyl ether were charged into the polymerization reactor. Next, an n-hexane solution containing 1.60 mmol of normal butyllithium was charged into the polymerization reactor, and the mixed solution was stirred at a stirring speed of 130 rpm and a polymerization reactor inner temperature of 65°C.

While 238 g of 1,3-butadiene and 162 g of styrene were continuously fed to the mixed solution, the mixed solution was further stirred for 4 hours under the above conditions, giving a polymerization solution. Next, 0.19 mmol of silicon tetrachloride was added to the resulting polymerization solution, and these were stirred for 15 minutes. Thereafter, 0.36 mmol of dimethylaminopropylacrylamide was added, followed by stirring for 15 minutes. Then, 20 mL of a hexane solution containing 0.81 mL of methanol was added, and the polymerization solution was further stirred for 5 minutes.

To the solution, 4.5 g of 2-tert-butyl-6-(3-tert-butyl-2-hydroxy-5-methylbenzyl)-4-methylphenyl acrylate (available from Sumitomo Chemical Co., Ltd., trade name: Sumilizer GM), 2.3 g of pentaerythrityltetrakis(3-laurylthiopropionate) (available from Sumitomo Chemical Co., Ltd., trade name: Sumilizer TP-D), and 375 g of extender oil (available from ENEOS Corporation, trade name: process NC140) were added, giving a polymer solution. Most of volatile contents of the resulting polymerization solution was evaporated at ambient temperature in 24 hours, followed by drying under reduced pressure at 55°C for 12 hours, giving a modified conjugated diene-based polymer (12).

[Synthetic Example 13]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 369.6 g of 1,3-butadiene, 688.9 g of styrene, 8.02 mL of tetrahydrofuran, and 18.5 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 10.51 mmol of normal butyllithium was added to start polymerization at 35°C. The temperature was raised from 35°C to 70°C over 90 minutes, and subsequently the temperature was maintained at 70°C. After the polymerization reaction was started, 221.8 g of 1,3-butadiene was continuously added over 75 minutes. When the polymerization conversion ratio reached 63% (after 35 minutes from the start of the polymerization reaction), 7.57 mmol of 1-butanol was added. After 75 minutes from the start of the polymerization reaction, 443.5 g of 1,3-butadiene was continuously added over 75 minutes. Subsequently, after 240 minutes from the start of the polymerization reaction, it was verified that the polymerization conversion ratio reached a range of 95% to 100%. Then, 0.11 mmol of silicon tetrachloride was added, and reacted for 10 minutes. Next, 15.77 mmol of [3-(diethylamino)propyl]trimethoxysilane was added, and reacted for 15 minutes. Subsequently, 23.7 mmol of normal butyllithium was added, and reacted for 15 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (13).

[Synthetic Example 14]

Under a nitrogen atmosphere, 8.16 kg of industrial hexane (available from Sumitomo Chemical Co., Ltd., trade

name: Hexane (general product), density: 0.68 g/mL), 2.34 kg of cyclohexane, 369.6 g of 1,3-butadiene, 688.9 g of styrene, 8.02 mL of tetrahydrofuran, and 18.5 mL of ethylene glycol diethyl ether were charged into an autoclave equipped with a stirrer having an inner volume of 20 L. A small amount of normal butyllithium as a scavenger was added to the autoclave to preliminarily detoxify impurities deactivating polymerization. Thereafter, 7.09 mmol of normal butyllithium was added to start polymerization at 35°C. The temperature was raised from 35°C to 70°C over 90 minutes, and subsequently the temperature was maintained at 70°C. After the polymerization reaction was started, 119 g of 1,3-butadiene was continuously added over 40 minutes. When the polymerization conversion ratio reached 51% (after 25 minutes from the start of the polymerization reaction), 4.32 mmol of 1-butanol was added. After 40 minutes from the start of the polymerization reaction, 546.3 g of 1,3-butadiene was continuously added over 160 minutes. Subsequently, after 240 minutes from the start of the polymerization reaction, it was verified that the polymerization conversion ratio reached a range of 95% to 100%. Then, 0.07 mmol of silicon tetrachloride was added, and reacted for 10 minutes. Next, 10.64 mmol of [3-(diethylamino)propyl]trimethoxysilane was added, and reacted for 15 minutes. Subsequently, 15.96 mmol of normal butyllithium was added, and reacted for 15 minutes. Subsequently, 1.5 equivalents of methanol relative to the total lithium amount in the autoclave was added as a polymerization terminator, giving a modified solution containing a conjugated diene-based polymer. To the solution, 0.80 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) relative to 100 parts of the modified conjugated diene-based polymer and 0.40 parts of pentaerythrityltetrakis(3-laurylthiopropionate) (available from Sumitomo Chemical Co., Ltd., trade name: Sumilizer TP-D) relative to 100 parts of the modified conjugated diene-based polymer were added as antioxidants, giving a polymer solution. Most of volatile contents of the resulting polymerization solution was evaporated at ambient temperature in 24 hours, followed by drying under reduced pressure at 55°C for 12 hours, giving a modified conjugated diene-based polymer (14).

[Synthetic Example 15]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 427.0 g of 1,3-butadiene, 702.0 g of styrene, 8.14 mL of tetrahydrofuran, 0.622 mL of ethylene glycol diethyl ether, and 1.309 mL of ethylene glycol dibutyl ether were charged into an autoclave equipped with a stirrer having an inner volume of 20 L. A small amount of normal butyllithium as a scavenger was added to the autoclave to preliminarily detoxify impurities deactivating polymerization. Thereafter, 6.31 mmol of normal butyllithium was added to start polymerization at 40°C. The temperature was raised from 40°C to 65°C over 30 minutes, and subsequently the temperature was maintained at 65°C. After the polymerization reaction was started, 604 g of 1,3-butadiene was continuously added over 90 minutes. After 90 minutes from the start of the polymerization reaction, 67.0 g of 1,3-butadiene was continuously added over 40 minutes. Subsequently, after 165 minutes from the start of the polymerization reaction, it was verified that the polymerization conversion ratio reached a range of 95% to 100%. Then, 1.28 mmol of 1,6-bis(trichloro silyl)hexane was added. After the reaction was performed for 15 minutes, 3.61 mmol of N-(3-dimethylaminopropyl)acrylamide was added. Subsequently, 1.5 equivalents of methanol relative to the total lithium amount in the autoclave was added as a polymerization terminator, giving a modified solution containing a conjugated diene-based polymer. To the solution, 0.56 parts of Irganox 1520L (available from BASF SE) as an antioxidant relative to 100 parts of the modified conjugated diene-based polymer and 25.0 parts of extender oil (available from ENEOS Corporation, trade name: process NC140) relative to 100 parts of the modified conjugated diene-based polymer were added, giving a polymer solution. Most of volatile contents of the resulting polymerization solution was evaporated at ambient temperature in 24 hours, followed by drying under reduced pressure at 55°C for 12 hours, giving a modified conjugated diene-based polymer (15).

[Synthetic Example 16]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 427.0 g of 1,3-butadiene, 702.0 g of styrene, 8.14 mL of tetrahydrofuran, 0.622 mL of ethylene glycol diethyl ether, and 1.309 mL of ethylene glycol dibutyl ether were charged into an autoclave equipped with a stirrer having an inner volume of 20 L. A small amount of normal butyllithium as a scavenger was added to the autoclave to preliminarily detoxify impurities deactivating polymerization. Thereafter, 6.31 mmol of normal butyllithium was added to start polymerization at 40°C. The temperature was raised from 40°C to 65°C over 30 minutes, and subsequently the temperature was maintained at 65°C. After the polymerization reaction was started, 604 g of 1,3-butadiene was continuously added over 90 minutes. When the polymerization conversion ratio reached 23% (after 28 minutes from the start of the polymerization reaction), 1.9 mmol of N-(3-dimethylaminopropyl)acrylamide was added. After 90 minutes from the start of the polymerization reaction, 67.0 g of 1,3-butadiene was continuously added over 40 minutes. Subsequently, after 165 minutes from the start of the polymerization reaction, it was verified that the polymerization conversion ratio reached a range of 95% to 100%. Then, 1.5

equivalents of methanol relative to the total lithium amount in the autoclave was added as a polymerization terminator, giving a modified solution containing a conjugated diene-based polymer. To the solution, 0.56 parts of Irganox 1520L (available from BASF SE) as an antioxidant relative to 100 parts of the modified conjugated diene-based polymer and 25.0 parts of extender oil (available from ENEOS Corporation, trade name: process NC140) relative to 100 parts of the modified conjugated diene-based polymer were added, giving a polymer solution. Most of volatile contents of the resulting polymerization solution was evaporated at ambient temperature in 24 hours, followed by drying under reduced pressure at 55°C for 12 hours, giving a modified conjugated diene-based polymer (16).

[Synthetic Example 17]

Under a nitrogen atmosphere, 8.16 kg of industrial hexane (available from Sumitomo Chemical Co., Ltd., trade name: Hexane (general product), density: 0.68 g/mL), 2.34 kg of cyclohexane, 427.0 g of 1,3-butadiene, 702.0 g of styrene, 8.14 mL of tetrahydrofuran, 0.622 mL of ethylene glycol diethyl ether, and 1.309 mL of ethylene glycol dibutyl ether were charged to an autoclave equipped with a stirrer having an inner volume of 20 L. A small amount of normal butyllithium as a scavenger was added to the autoclave to preliminarily detoxify impurities deactivating polymerization. Thereafter, 6.31 mmol of piperidine was added, and 6.31 mmol of normal butyllithium was added to start polymerization at 40°C. The temperature was raised from 40°C to 65°C over 30 minutes, and subsequently the temperature was maintained at 65°C. After the polymerization reaction was started, 604 g of 1,3-butadiene was continuously added over 90 minutes. After 6 minutes from the start of the polymerization reaction, 2.26 mmol of bis(diethylamino)methylvinylsilane was added. When the polymerization conversion ratio reached 28% (after 28 minutes from the start of the polymerization reaction), 1.9 mmol of N-(3-dimethylaminopropyl)acrylamide was added. After 90 minutes from the start of the polymerization reaction, 67.0 g of 1,3-butadiene was continuously added over 40 minutes. Subsequently, after 165 minutes from the start of the polymerization reaction, it was verified that the polymerization conversion ratio reached a range of 95% to 100%. Then, 4.73 mmol of N-(3-dimethylaminopropyl)acrylamide was added. Subsequently, 1.5 equivalents of methanol relative to the total lithium amount in the autoclave was added as a polymerization terminator, giving a modified solution containing a conjugated diene-based polymer. To the solution, 0.56 parts of Irganox 1520L (available from BASF SE) as an antioxidant relative to 100 parts of the modified conjugated diene-based polymer and 25.0 parts of extender oil (available from ENEOS Corporation, trade name: process NC140) relative to 100 parts of the modified conjugated diene-based polymer were added, giving a polymer solution. Most of volatile contents of the resulting polymerization solution was evaporated at ambient temperature in 24 hours, followed by drying under reduced pressure at 55°C for 12 hours, giving a modified conjugated diene-based polymer (17).

Table 1 shows the properties of the modified conjugated diene-based polymers (1) to (17) prepared in Synthetic Examples 1 to 17.

[Table 1]

Table 1

| | Type of polymer | Oil content | ML(1+4) 125°C | Styrene unit content | Vnyl bond content | Entire Mw | Entire Mw/Mn | Mp of high molecular weight molecule peak (HP) | Ratio of area of high molecular weight molecule peak (HP) | Mp of low molecular weight molecule peak (LP ) | Ratio of area of low molecular weight molecule peak (LP) | Number of peaks | Ionic strength index | Difference ΔA in aromatic vinyl monomer unit content |
|---|---|---|---|---|---|---|---|---|---|---|---|---|---|---|
| | | phr | | wt% | % | $x10^4$ | | $x10^4$ | % | $x10^4$ | % | | % | wt% |
| Synthetic Example 1 | Modified conjugated diene-based polymer (1) | 0 | 74.0 | 14.6 | 30.5 | 70.1 | 2123 | 83.7 | 66.7 | 14.3 | 27.7 | 3 | 77.8 | -1.5 |
| Synthetic Example 2 | Modified conjugated diene-based polymer (2) | 0 | 61.5 | 15.4 | 31.6 | 78.7 | 2216 | 108.9 | 71.0 | 14.4 | 29.0 | 2 | 1.6 | -3.0 |
| Synthetic Example 3 | Modified conjugated diene-based polymer (3) | 0 | 54.8 | 15.3 | 31.1 | 61.9 | 2294 | 95.5 | 58.3 | 12.9 | 33.1 | 3 | 57.6 | -2.4 |
| Synthetic Example 4 | Modified conjugated diene-based polymer (4) | 0 | 53.5 | 14.1 | 30.3 | 67.6 | 3.043 | 79.3 | 37.8 | 10.8 | 41.3 | 3 | 13.4 | 6.5 |
| Synthetic Example 5 | Modified conjugated diene-based polymer (5) | 0 | 49.5 | 25.1 | 57.7 | 70.5 | 244 | 105.0 | 59.5 | 14.0 | 34.2 | 3 | 66.1 | -8.0 |

(continued)

| | Type of polymer | Oil content | ML(1+4) 125°C | Styrene unit content | Vnyl bond content | Entire Mw | Entire Mw/Mn | Mp of high molecular weight molecule peak (HP) | Ratio of area of high molecular weight molecule peak (HP) | Mp of low molecular weight molecule peak (LP ) | Ratio of area of low molecular weight molecule peak (LP) | Number of peaks | Ionic strength index | Difference ΔA in aromatic vinyl monomer unit content |
|---|---|---|---|---|---|---|---|---|---|---|---|---|---|---|
| | | phr | | wt% | % | x$10^4$ | | x$10^4$ | % | x$10^4$ | % | | % | wt% |
| Synthetic Example 6 | Modified conjugated diene-based polymer (6) | 0 | 85.5 | 25.0 | 58.6 | 77.1 | 2.429 | 92.8 | 77.1 | 9.6 | 18.9 | 3 | 71.9 | -7.1 |
| Synthetic Example 7 | Modified conjugated diene-based polymer (7) | 0 | 47.0(*1) | 25.7 | 59.6 | 41.5 | 1.528 | 81.9 | 35.8 | 22.0 | 64.1 | 3 | 56.1 | 0.2 |
| Synthetic Example 8 | Modified conjugated diene-based polymer (8) | 0 | 40.5 | 24.8 | 56.7 | 41.3 | 1.834 | 51.6 | 61.2 | 10.8 | 31.9 | 3 | 40.6 | 9.1 |
| Synthetic Example 9 | Modified conjugated diene-based polymer (9) | 0 | 49.5 | 24.7 | 56.5 | 60.6 | 214 | 87.3 | 52.6 | 14.7 | 40.9 | 3 | 29.0 | 11.8 |
| Synthetic Example 10 | Modified conjugated diene-based polymer (10) | 0 | 60.5 | 41.2 | 69.8 | 66.7 | 2322 | 75.8 | 77.6 | 11.3 | 224 | 2 | 63.7 | -10.6 |

(continued)

| | Type of polymer | Oil content | ML(1+4) 125°C | Styrene unit content | Vnyl bond content | Entire Mw | Entire Mw/Mn | Mp of high molecular weight molecule peak (HP) | Ratio of area of high molecular weight molecule peak (HP) | Mp of low molecular weight molecule peak (LP ) | Ratio of area of low molecular weight molecule peak (LP) | Number of peaks | Ionic strength index | Difference ΔA in aromatic vinyl monomer unit content |
|---|---|---|---|---|---|---|---|---|---|---|---|---|---|---|
| | | phr | | wt% | % | $x10^4$ | | $x10^4$ | % | $x10^4$ | % | | % | wt% |
| Synthetic Example 11 | Modified conjugated diene-based polymer (11) | 0 | 95.5 | 40.5 | 71.3 | 88.8 | 2459 | 107.7 | 74.0 | 16.8 | 26.0 | 2 | 62.9 | -13.3 |
| Synthetic Example 12 | Modified conjugated diene-based polymer (12) | 37.5 | 60.0(*1) | 41.4 | 69.6 | 123.0 | 1.747 | 86.2 | 71.5 | - | - | 3 | 2.0 | 0.2 |
| Synthetic Example 13 | Modified conjugated diene-based polymer (13) | 0 | 33.0 | 41.1 | 72.0 | 43.9 | 2.362 | 72.3 | 30.8 | 12.4 | 60.9 | 3 | 1.0 | 32.0 |
| Synthetic Example 14 | Modified conjugated diene-based polymer (14) | 0 | 64.7 | 41.2 | 70.0 | 62.7 | 224 | 109.4 | 37.5 | 15.1 | 39.0 | 4 | 9.0 | 23.1 |
| Synthetic Example 15 | Modified conjugated diene-based polymer (15) | 25 | 43.4 | 39.4 | 37.6 | 84.0 | 1.705 | 109.3 | 74.9 | 22.9 | 25.1 | 2 | 0.0 | 0.4 |

(continued)

| | Type of polymer | Oil content | ML(1+4) 125°C | Styrene unit content | Vnyl bond content | Entire Mw | Entire Mw/Mn | Mp of high molecular weight molecule peak (HP) | Ratio of area of high molecular weight molecule peak (HP) | Mp of low molecular weight molecule peak (LP ) | Ratio of area of low molecular weight molecule peak (LP) | Number of peaks | Ionic strength index | Difference ΔA in aromatic vinyl monomer unit content |
|---|---|---|---|---|---|---|---|---|---|---|---|---|---|---|
| | | phr | | wt% | % | $x10^4$ | | $x10^4$ | % | $x10^4$ | % | | % | wt% |
| Synthetic Example 16 | Modified conjugated diene-based polymer (16) | 25 | 58.6 | 37.3 | 33.7 | 70.8 | 1.723 | 99.6 | 71.6 | 18.4 | 23.9 | 3 | 11.7 | 4.5 |
| Synthetic Example 17 | Modified conjugated diene-based polymer (17) | 25 | 57.7 | 36.8 | 37.9 | 72.1 | 1.903 | 101.2 | 72.3 | 18.3 | 277 | 3 | 38.7 | 3.4 |

(*1) The result of ML(1+4), 100°C

[Preparation of rubber composition; Example 1, Comparative Examples 1 to 3]

Using the modified conjugated diene-based polymers (1) to (4) prepared in Synthetic Examples 1 to 4, rubber compositions were prepared by the following method. Specifically, in Labo Plastomill having a volume of 250 mL, each of the modified conjugated diene-based polymers was masticated for 30 seconds. Then, the ingredients shown as a compounding agent 1 in Table 2 were added in the compounding proportion shown in Table 2, and were kneaded for 1 minute 30 seconds. Thereafter, the ingredients shown as a compounding agent 2 in Table 2 were added in the compounding proportion shown in Table 2, and further were kneaded for 2 minutes 30 seconds. Then, after the temperature reached 150°C, the temperature was maintained for 1 minute, and the rubber composition after primary kneading was discharged from the Labo Plastomill.

Next, after the Labo Plastomill having a volume of 250 mL was set at a temperature of 110°C, the rubber composition after primary kneading was kneaded for 3 minutes, and the rubber composition after secondary kneading was discharged from the Labo Plastomill.

Then, the rubber composition after secondary kneading was wound around an open roll mill set to 50°C. The ingredients shown as vulcanization ingredients shown in Table 2 were added in the compounding proportion shown in Table 2, and were kneaded, giving an uncross-linked rubber composition having a sheet shape. The uncross-linked rubber compositions obtained were evaluated for compound Mooney viscosity (ML1+4) by the method described above. The results are shown in Table 3.

The uncross-linked rubber compositions obtained above were cross-linked by heating at 160°C for 30 to 35 minutes, giving cross-linked rubber sheets. The resulting cross-linked rubber sheets were evaluated for wet grip properties, driving stability, tensile strength, and elongation by the methods above. The results are shown in Table 3.

[Preparation of rubber composition; Examples 2 to 7, Comparative Examples 4 to 10]

Using the modified conjugated diene-based polymers (5) to (17) prepared in Synthetic Examples 5 to 17, rubber compositions were prepared by the following method. Specifically, each of the modified conjugated diene-based polymers was masticated for 30 seconds in a Labo Plastomill having a volume of 250 mL. Then, the ingredients shown as a compounding agent 1 shown in Table 2 were added in a compounding proportion shown in Table 2, and were kneaded for 1 minute 30 seconds. Thereafter, the ingredients shown as a compounding agent 2 shown in Table 2 in the compounding proportion in Table 2, and further were kneaded for 1 minute 30 seconds. The temperature reached 150°C, and kneading was further performed for 1 minute 30 seconds. Then, the rubber composition after primary kneading was discharged from the Labo Plastomill.

Next, the Labo Plastomill having a volume of 250 mL was set to a temperature of 110°C. The rubber composition after primary kneading was kneaded for 3 minutes, and then the rubber composition after secondary kneading was discharged from the Labo Plastomill.

Next, the rubber composition after secondary kneading was wound around an open roll mill set to 50°C. The ingredients shown as vulcanization ingredients shown in Table 2 were added in the compounding proportion shown in Table 2, and were kneaded, giving an uncross-linked rubber composition having a sheet shape. The uncross-linked rubber compositions obtained were evaluated for compound Mooney viscosity (ML1+4) by the method above. The results are shown in Table 3.

The uncross-linked rubber compositions obtained above were cross-linked by heating at 160°C for 20 to 25 minutes, giving cross-linked rubber sheets. The resulting cross-linked rubber sheets were evaluated for wet grip properties, driving stability, tensile strength, and elongation by the methods above. The results are shown in Table 3.

[Table 2]

Table 2

| | | | Comp. Ex. 1 | Comp. Ex 2 | Comp. Ex. 3 | Ex. 1 | Comp. Ex. 4 | Comp. Ex. 5 | Comp. Ex. 6 | Ex. 2 | Ex. 3 | Comp. Ex. 7 | Comp. Ex 8 | Comp. Ex 9 | Ex 4 | Ex 5 | Comp. Ex 10 | Ex. 6 | Ex 7 |
|---|---|---|---|---|---|---|---|---|---|---|---|---|---|---|---|---|---|---|---|
| | | Modified conjugated diene-based polymer (1) | 80 | - | - | - | - | - | - | - | - | - | - | - | - | - | - | - | - |
| | | Modified conjugated diene-based polymer (2) | - | 80 | - | - | - | - | - | - | - | - | - | - | - | - | - | - | - |
| | | Modified conjugated diene-based polymer (3) | - | - | 80 | - | - | - | - | - | - | - | - | - | - | - | - | - | - |
| | | Modified conjugated diene-based polymer (4) | - | - | - | 80 | - | - | - | - | - | - | - | - | - | - | - | - | - |
| | | Modified conjugated diene-based polymer (5) | - | - | - | - | 80 | - | - | - | - | - | - | - | - | - | - | - | - |
| | | Modified conjugated diene-based polymer (6) | - | - | - | - | - | 80 | - | - | - | - | - | - | - | - | - | - | - |
| | | Modified conjugated diene-based polymer (7) | - | - | - | - | - | - | 80 | - | - | - | - | - | - | - | - | - | - |
| | | Modified conjugated diene-based polymer (8) | - | - | - | - | - | - | - | 80 | - | - | - | - | - | - | - | - | - |

(continued)

| | | | Comp. Ex. 1 | Comp. Ex 2 | Comp. Ex. 3 | Ex. 1 | Comp. Ex. 4 | Comp. Ex. 5 | Comp. Ex. 6 | Ex. 2 | Ex. 3 | Comp. Ex. 7 | Comp. Ex 8 | Comp. Ex 9 | Ex 4 | Ex 5 | Comp. Ex 10 | Ex. 6 | Ex 7 |
|---|---|---|---|---|---|---|---|---|---|---|---|---|---|---|---|---|---|---|---|
| Compounding proportion (parts) | Polymer | Modified conjugated diene-based polymer (9) | - | - | - | - | - | - | - | - | 80 | - | - | - | - | - | - | - | - |
| | | Modified conjugated diene-based polymer (10) | - | - | - | - | - | - | - | - | - | 80 | - | - | - | - | - | - | - |
| | | Modified conjugated diene-based polymer (11) | - | - | - | - | - | - | - | - | - | - | 80 | - | - | - | - | - | - |
| | | Modified conjugated diene-based polymer (12)(*) | - | - | - | - | - | - | - | - | - | - | - | 110 | - | - | - | - | - |
| | | Modified conjugated diene-based polymer (13) | - | - | - | - | - | - | - | - | - | - | - | - | 80 | - | - | - | - |
| | | Modified conjugated diene-based polymer (14) | - | - | - | - | - | - | - | - | - | - | - | - | - | 80 | - | - | - |
| | | Modified conjugated diene-based polymer (15)(*) | - | - | - | - | - | - | - | - | - | - | - | - | - | - | 125 | - | - |
| | | Modified conjugated diene-based polymer (16)(*) | - | - | - | - | - | - | - | - | - | - | - | - | - | - | - | 125 | - |

(continued)

| | | | Comp. Ex. 1 | Comp. Ex 2 | Comp. Ex. 3 | Ex. 1 | Comp. Ex. 4 | Comp. Ex. 5 | Comp. Ex. 6 | Ex. 2 | Ex. 3 | Comp. Ex. 7 | Comp. Ex 8 | Comp. Ex 9 | Ex 4 | Ex 5 | Comp. Ex 10 | Ex. 6 | Ex 7 |
|---|---|---|---|---|---|---|---|---|---|---|---|---|---|---|---|---|---|---|---|
| | | Modified conjugated diene-based polymer (17)(*) | - | - | - | - | - | - | - | - | - | - | - | - | - | - | - | - | 125 |
| | | BR | 20 | 20 | 20 | 20 | 20 | 20 | 20 | 20 | 20 | 20 | 20 | 20 | 20 | 20 | - | - | - |
| | Compounding agent 1 | Silica | 53.3 | 53.3 | 53.3 | 53.3 | 53.3 | 53.3 | 53.3 | 53.3 | 53.3 | 53.3 | 53.3 | 53.3 | 53.3 | 53.3 | 53.3 | 53.3 | 53.3 |
| | | Oil | 30 | 30 | 30 | 30 | 30 | 30 | 30 | 30 | 30 | 30 | 30 | 0 | 30 | 30 | 12.5 | 12.5 | 12.5 |
| | | Silane coupling agent 1 | 6.4 | 6.4 | 6.4 | 6.4 | 6.4 | 6.4 | 6.4 | 6.4 | 6.4 | 6.4 | 6.4 | 6.4 | 6.4 | 6.4 | - | - | - |
| | | Silane coupling agent 2 | - | - | - | - | - | - | - | - | - | - | - | - | - | - | 6.4 | 6.4 | 6.4 |
| | Compounding agent 2 | Silica | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 |
| | | Zinc oxide | 3 | 3 | 3 | 3 | 3 | 3 | 3 | 3 | 3 | 3 | 3 | 3 | 3 | 3 | 3 | 3 | 3 |
| | | Stearic acid | 2 | 2 | 2 | 2 | 2 | 2 | 2 | 2 | 2 | 2 | 2 | 2 | 2 | 2 | 2 | 2 | 2 |
| | | Antioxidant | 2 | 2 | 2 | 2 | 2 | 2 | 2 | 2 | 2 | 2 | 2 | 2 | 2 | 2 | 2 | 2 | 2 |
| | Vulcanization ingredients | Sulfur | 1.7 | 1.7 | 1.7 | 1.7 | 1.7 | 1.7 | 1.7 | 1.7 | 1.7 | 1.7 | 1.7 | 1.7 | 1.7 | 1.7 | 1.5 | 15 | 15 |
| | | Vulcanization accelerator (1) | 1.8 | 1.8 | 1.8 | 1.8 | 1.8 | 1.8 | 1.8 | 1.8 | 1.8 | 1.8 | 1.8 | 1.8 | 1.8 | 1.8 | 1.5 | 1.5 | 1.5 |
| | | Vulcanization accelerator (2) | 1.7 | 1.7 | 1.7 | 1.7 | 1.7 | 1.7 | 1.7 | 1.7 | 1.7 | 1.7 | 1.7 | 1.7 | 1.7 | 1.7 | 2 | 2 | 2 |

(*) In the table above, Modified conjugated diene-based polymers (12), (15), (16), and (17) contain oil in an amount shown in Table 1.

The material shown in Table 2 are as follows:

- · BR: butadiene rubber (available from ZEON Corporation, "Nipol BR1220")
- · Silica: available from Rhodia S.A., trade name "Zeosil 1165MP"
- · Oil: available from NIPPON OIL CORPORATION, trade name "AROMAX T-DAE"
- · Silane coupling agent 1: bis(3-(triethoxysilyl)propyl)tetrasulfide, available from Evonik Industries AG, trade name "Si69 (registered trademark)"
- · Silane coupling agent 2: bis(3-(triethoxysilyl)propyl)disulfide, available from Evonik Industries AG, trade name "Si75 (registered trademark)"
- · Zinc oxide: available from Seido Chemical Industry Co., Ltd., trade name "Zinc oxide II"
- · Stearic acid: available from NOF CORPORATION, trade name "BEAD STEARIC ACID CAMELLIA"
- · Antioxidant: 6PPD, N-phenyl-N'-(1,3-dimethylbutyl)-p-phenylenediamine (available from Ouchi Shinko Chemical Industrial Co., Ltd., trade name "NOCRAC 6C")
- · Sulfur: available from Tsurumi Chemical Industry Co., Ltd., trade name "Sulfur 325 mesh"
- · Vulcanization accelerator (1): N-cyclohexyl-2-benzothiazylsulfeneamide (available from Ouchi Shinko Chemical Industrial Co., Ltd., trade name "NOCCELER CZ-G")
- · Vulcanization accelerator (2): diphenylguanidine (available from Ouchi Shinko Chemical Industrial Co., Ltd., trade name "NOCCELER D")

[Table 3]

Table 3

| | | Type of polymer | Processability | Wet grip properties | Driving stability | Tensile strength | Elongation |
|---|---|---|---|---|---|---|---|
| Comp. Ex. 1 | Synthetic Ex. 1 | Modified conjugated diene-based polymer (1) | 75 | 86 | 51 | 96 | 79 |
| Comp. Ex. 2 | Synthetic Ex. 2 | Modified conjugated diene-based polymer (2) | 96 | 100 | 101 | 100 | 98 |
| Comp. Ex. 3 | Synthetic Ex. 3 | Modified conjugated diene-based polymer (3) | 87 | 89 | 92 | 96 | 89 |
| Ex. 1 | Synthetic Ex. 4 | Modified conjugated diene-based polymer (4) | 100 | 100 | 100 | 100 | 100 |
| Comp. Ex. 4 | Synthetic Ex. 5 | Modified conjugated diene-based polymer (5) | 93 | 103 | 88 | 107 | 100 |
| Comp. Ex. 5 | Synthetic Ex. 6 | Modified conjugated diene-based polymer (6) | 79 | 106 | 86 | 114 | 105 |
| Comp. Ex. 6 | Synthetic Ex. 7 | Modified conjugated diene-based polymer (7) | 144 | 108 | 97 | 93 | 95 |
| Ex. 2 | Synthetic Ex. 8 | Modified conjugated diene-based polymer (8) | 114 | 100 | 100 | 100 | 100 |
| Ex. 3 | Synthetic Ex. 9 | Modified conjugated diene-based polymer (9) | 100 | 109 | 107 | 107 | 103 |

(continued)

| | | Type of polymer | Processability | Wet grip properties | Driving stability | Tensile strength | Elongation |
|---|---|---|---|---|---|---|---|
| Comp. Ex. 7 | Synthetic Ex. 10 | Modified conjugated diene-based polymer (10) | 106 | 186 | 78 | 116 | 118 |
| Comp. Ex. 8 | Synthetic Ex. 11 | Modified conjugated diene-based polymer (11) | 97 | 177 | 89 | 121 | 124 |
| Comp. Ex. 9 | Synthetic Ex. 12 | Modified conjugated diene-based polymer (12) | 71 | 192 | 79 | 129 | 129 |
| Ex. 4 | Synthetic Ex. 13 | Modified conjugated diene-based polymer (13) | 124 | 100 | 109 | 100 | 100 |
| Ex. 5 | Synthetic Ex. 14 | Modified conjugated diene-based polymer (14) | 100 | 130 | 100 | 108 | 109 |
| Comp. Ex. 10 | Synthetic Ex. 15 | Modified conjugated diene-based polymer (15) | 131 | 119 | 126 | 99 | 86 |
| Ex. 6 | Synthetic Ex. 16 | Modified conjugated diene-based polymer (16) | 120 | 100 | 113 | 100 | 100 |
| Ex. 7 | Synthetic Ex. 17 | Modified conjugated diene-based polymer (17) | 100 | 101 | 100 | 112 | 100 |

As also clearly shown in Tables 1 to 3, the conjugated diene-based copolymers wherein the difference ΔA between the aromatic vinyl monomer unit content ($A_L$) in a low molecular weight component (L) and the aromatic vinyl monomer unit content ($A_H$) in a high molecular weight component (H), that is, "difference ΔA = aromatic vinyl monomer unit content ($A_L$) - aromatic vinyl monomer unit content ($A_H$)" was 2% by weight or more, had high processability and gave cross-linked rubbers having, high wet grip properties, high driving stability, high tensile strength, and excellent elongation (Examples 1 to 7) .

## Claims

1. A conjugated diene-based polymer comprising a conjugated diene monomer unit and an aromatic vinyl monomer unit, wherein a difference ΔA between an aromatic vinyl monomer unit content ($A_L$) in a low molecular weight component (L) contained in the conjugated diene-based polymer and an aromatic vinyl monomer unit content ($A_H$) in a high molecular weight component (H) contained in the conjugated diene-based polymer "difference ΔA = aromatic vinyl monomer unit content ($A_L$) - aromatic vinyl monomer unit content ($A_H$)" is 2% by weight or more.

2. The conjugated diene-based polymer according to claim 1, wherein the conjugated diene-based polymer shows two or more peaks in a molecular weight distribution curve obtained with measurement by gel permeation chromatography,

   the two or more peaks include a low molecular weight molecule peak (LP) having a peak top molecular weight of 80,000 to 200,000, and
   the conjugated diene-based polymer has an ionic strength index of 70% or less.

3. The conjugated diene-based polymer according to claim 2, wherein the peak top molecular weight of the low molecular weight molecule peak (LP) is 100,000 to 190,000.

4. The conjugated diene-based polymer according to claim 2 or 3, wherein the proportion of a polymer component corresponding to the low molecular weight molecule peak (LP) is 10 to 65% by weight.

5. The conjugated diene-based polymer according to any one of claims 2 to 4, wherein the conjugated diene-based polymer has an entire weight average molecular weight (Mw) of 300,000 to 900,000.

6. A conjugated diene-based polymer composition comprising the conjugated diene-based polymer according to any one of claims 1 to 5, and a filler.

7. A cross-linked rubber prepared by cross-linking the conjugated diene-based polymer composition according to claim 6.

8. A tire comprising the cross-linked rubber according to claim 7.

9. A method of producing the conjugated diene-based polymer according to any one of claims 1 to 5, the method comprising:

a first step of copolymerizing monomers containing a conjugated diene monomer and an aromatic vinyl monomer in a solvent in the presence of a polymerization initiator;
a second step of deactivating part of polymerization active terminals contained in a polymerization reaction system by adding a polymerization reaction terminator in such an amount that it deactivates 10 to 95 mol% of the polymerization active terminals when a polymerization conversion ratio reaches 5% or more and less than 95%, and then continuing a polymerization reaction; and
a third step of terminating the polymerization reaction by adding a polymerization reaction terminator after the polymerization conversion ratio reaches 95% or more.

10. The method of producing the conjugated diene-based polymer according to claim 9, wherein the total amount of the aromatic vinyl monomer used in the polymerization reaction is added to the polymerization reaction system before a start of the polymerization reaction.

11. The method of producing the conjugated diene-based polymer according to claim 9 or 10, wherein when a total amount of the conjugated diene monomer and the aromatic vinyl monomer copolymerizable with the conjugated diene monomer used in the polymerization reaction is regarded as 100% by weight, 40 to 70% by weight of a total amount of the conjugated diene monomer and the aromatic vinyl monomer copolymerizable with the conjugated diene monomer is added to the polymerization reaction system before a start of the polymerization reaction.

12. The method of producing the conjugated diene-based polymer according to any one of claims 9 to 11, wherein the polymerization reaction terminator is added in the second step in such an amount that it deactivates 20 to 95 mol% of polymerization active terminals contained in the polymerization reaction system.

13. The method of producing the conjugated diene-based polymer according to any one of claims 9 to 12, wherein the polymerization reaction terminator is added in the second step at a timing at which the polymerization conversion ratio is 15 to 75%.

## INTERNATIONAL SEARCH REPORT

International application No.
**PCT/JP2023/043887**

**A. CLASSIFICATION OF SUBJECT MATTER**

***C08F 2/40***(2006.01)i; ***B60C 1/00***(2006.01)i; ***C08F 236/10***(2006.01)i; ***C08L 9/06***(2006.01)i
FI: C08F2/40; C08F236/10; C08L9/06; B60C1/00 A

According to International Patent Classification (IPC) or to both national classification and IPC

**B. FIELDS SEARCHED**

Minimum documentation searched (classification system followed by classification symbols)

C08F2/40; B60C1/00; C08F236/10; C08L9/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-268041 A (NIPPON ZEON CO.) 25 September 2003 (2003-09-25)<br>claims, examples, paragraph [0095] | 1-13 |
| X<br>A | JP 2022-30649 A (ASAHI KASEI KABUSHIKI KAISHA) 18 February 2022 (2022-02-18)<br>claims, examples | 1, 6-8<br>2-5, 9-13 |
| A | WO 2013/099324 A1 (SUMITOMO RUBBER INDUSTRIES, LTD.) 04 July 2013 (2013-07-04)<br>claims, examples | 1-13 |
| A | JP 2010-155935 A (NIPPON ZEON CO.) 15 July 2010 (2010-07-15)<br>claims, examples | 1-13 |
| A | JP 2014-231575 A (THE YOKOHAMA RUBBER CO., LTD.) 11 December 2014 (2014-12-11)<br>claims, examples | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2023/043887**

C. DOCUMENTS CONSIDERED TO BE RELEVANT

| Category* | Citation of document, with indication, where appropriate, of the relevant passages | Relevant to claim No. |
|---|---|---|
| A | WO 2022/080235 A1 (ZS ELASTOMERS CO., LTD.) 21 April 2022 (2022-04-21) claims, examples | 1-13 |
| A | JP 9-143209 A (KAO CORPORATION) 03 June 1997 (1997-06-03) claims, examples | 1-13 |

Form PCT/ISA/210 (second sheet) (July 2022)

**INTERNATIONAL SEARCH REPORT**
**Information on patent family members**

International application No.
**PCT/JP2023/043887**

| Patent document cited in search report | Publication date (day/month/year) | Patent family member(s) | Publication date (day/month/year) |
| --- | --- | --- | --- |
| JP 2003-268041 A | 25 September 2003 | US 2005/0154156 A1<br>claims, examples, paragraph [0163]<br>EP 1486513 A1<br>CN 1653096 A<br>KR 10-0990352 B1 | |
| JP 2022-30649 A | 18 February 2022 | EP 3950814 A1<br>claims, examples<br>CN 114058151 A | |
| WO 2013/099324 A1 | 04 July 2013 | US 2014/0329930 A1<br>claims, examples<br>EP 2787031 A1<br>CN 103987774 A<br>CN 106916351 A | |
| JP 2010-155935 A | 15 July 2010 | (Family: none) | |
| JP 2014-231575 A | 11 December 2014 | (Family: none) | |
| WO 2022/080235 A1 | 21 April 2022 | EP 4230432 A1<br>claims, examples<br>CN 116323246 A<br>KR 10-2023-0087459 A<br>TW 202229372 A | |
| JP 9-143209 A | 03 June 1997 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018147312 A
- US 5708092 A
- GB 2241239 A
- US 5527753 A